# DEMANDE DE BREVET EUROPEEN

(11) **EP 4 633 222 A1**
(43) Date de publication de la demande: **15.10.2025**
(21) Numéro de dépôt: 25168440.3
(22) Date de dépôt: 04.04.2025
(51) Int. Cl.: H04W 24/02, H04W 76/15

(54) **PROCÉDÉ DE GESTION DE N UDS D'UN RÉSEAU DE COMMUNICATION SANS FIL, PROCÉDÉ DE TRAITEMENT D'UNE REQUÊTE DE MODIFICATION D'UNE CONFIGURATION D'UNE CONNEXION ENTRE LES N UDS, DISPOSITIFS ET PROGRAMMES D ORDINATEUR CORRESPONDANTS**

(30) Priorité: 10.04.2024 FR 2403704
(71) Demandeur: SAGEMCOM BROADBAND SAS, 92270 Bois-Colombes (FR)
(72) Inventeur: NGUYEN DINH HIEN, Michael Thien Bao, 92270 Bois-Colombes (FR)
(74) Mandataire: Novagraaf Technologies

(57) **Abrégé**

L'invention concerne un procédé de gestion d'une configuration d'une pluralité de nœuds d'un réseau de communication sans fil contrôlé par un nœud contrôleur), ledit procédé comprenant les étapes de :
- obtention (30) d'une information relative à une action de contrôle sur une desdites bandes de fréquences, programmée pour être exécutée par au moins undit nœud, dit nœud exécutant ;
- émission (34), à destination d'au moins un nœud, dit nœud impacté, de la pluralité de nœuds, comprenant ledit au moins un nœud exécutant, ledit nœud impacté ayant établi au moins une connexion multi-liens avec au moins un autre nœud de ladite pluralité de nœuds, d'une requête de modification de configuration de ladite au moins une connexion, pour un lien de la connexion multi-liens utilisant la bande de fréquences, ladite modification de configuration étant fonction de ladite action de contrôle ; et
- sur réception (35), en provenance dudit au moins undit nœud impacté, d'une confirmation de modification de configuration de ladite au moins une connexion, émission (36) à destination dudit nœud contrôleur d'une information indiquant que ladite action de contrôle programmée sur ladite bande de fréquences est prête à être exécutée.

## Description

### Domaine technique

L'invention se rapporte au domaine technique des réseaux de communications sans fil et, plus précisément à des équipements d'accès, ou points d'accès, à des réseaux de communication sans fil, qui sont connectés entre eux par une pluralité de liens mettant en œuvre des bandes de fréquences distinctes. Elle concerne en particulier l'adaptation d'une configuration d'une connexion entre deux équipements d'accès lorsqu'une action de contrôle susceptible de perturber les communications sur l'une ou plusieurs de ces bandes de fréquences via cette connexion doit être exécutée.

### Etat de la technique antérieure

On connaît de la norme de communication sans fil IEEE802.11be, de la famille IEEE802.11, standardisée par l'IEEE et adoptée par la Wi-Fi alliance sous le nom de Wi-Fi 7, une solution permettant de connecter des appareils entre eux sur plusieurs bandes de fréquences différentes en même temps, qui sont utilisées ensemble pour transmettre et recevoir des données entre ces appareils.

On connait aussi de la norme appelée EasyMesh, standardisée elle aussi par la Wi-Fi alliance, une solution de déploiement et de gestion d'un réseau maillé sans fil reliant entre eux des appareils points d'accès Wi-Fi potentiellement produits par différents fabricants. Elle est basée sur un ensemble de transactions entre ces points d'accès formant des nœuds de ce réseau maillé, typiquement un équipement nœud contrôleur et des équipements nœuds agents. Selon cette solution, les nœuds agents s'enregistrent auprès du nœud contrôleur du réseau afin d'être configurés par ce dernier. Le nœud contrôleur bénéficie d'une vision globale du réseau, en ce qu'il connaît à la fois la configuration et l'état de chaque agent du réseau.

Dans le cadre de la gestion d'un tel réseau maillé sans fil, le nœud contrôleur est régulièrement amené à déclencher l'exécution de diverses procédures ou actions de contrôle au niveau d'un ou plusieurs nœuds agents et plus précisément d'une ou plusieurs des bandes de fréquences qu'ils utilisent pour communiquer entre eux. Elles agissent sur le nœud et sur les connexions qu'il a établies avec d'autres nœuds.

De telles actions sont donc susceptibles de perturber les communications entre les équipements nœuds, à des niveaux variés, de façon plus ou moins impactante. A titre d'exemples et de manière non exhaustive, on cite :
- une procédure d'analyse ou de balayage d'une bande de fréquences ou Wi-Fi Scan, qui est une opération effectuée par un appareil pour rechercher et détecter les réseaux Wi-Fi disponibles dans son environnement. Lorsqu'un appareil comme un téléphone intelligent (en anglais, « smartphone »), un ordinateur portable ou une tablette effectue un scan Wi-Fi, il envoie des signaux radio sur la bande de fréquences pour détecter les réseaux Wi-Fi à proximité. Ces signaux radio permettent à l'appareil de repérer les réseaux WiFi actifs, de récupérer des informations sur ces réseaux tels que leur nom ou identifiant de service SSID (en anglais, « Service Set Identifier »), leur puissance de signal, leur canal, leur mode de sécurité, etc. On comprend que pendant cette opération de balayage de la bande de fréquences, l'appareil ne peut pas transmettre ni recevoir de données sur cette bande de fréquences. Pour un parcours complet sur une bande de fréquences assez large, le temps de scan peut durer plusieurs secondes.
- une procédure de vérification d'une disponibilité d'un canal Wi-Fi ou Wi-Fi CAC (de l'anglais « Channel Availability Check »), qui est une fonctionnalité spécifique du protocole Wi-Fi, conçue pour aider à réguler l'accès concurrentiel à ce canal de transmission. En mettant en œuvre cette procédure, un appareil Wi-Fi peut détecter et surveiller le trafic sur le canal en question, avant de transmettre des données. Cela permet à l'appareil de s'assurer qu'il n'y a pas d'autres transmissions en cours qui pourraient causer des collisions de données et perturber la communication. La procédure de Wi-Fi CAC est particulièrement importante dans les environnements où plusieurs appareils Wi-Fi opèrent dans un espace restreint, comme dans les réseaux sans fil d'entreprise ou les zones densément peuplées. Elle aide à éviter les interférences et à maintenir des performances réseau optimales. Une utilisation particulière de cette procédure de Wi-Fi CAC est une préparation à un changement de canal vers un canal protégé pour les radars. Selon une régulation officielle portant sur une partie de la bande de fréquences radar autour de 5GHz, tout appareil souhaitant utiliser cette partie de la bande de fréquences protégée est tenu au préalable d'écouter passivement tout signal radar potentiel pendant au moins une minute avant d'émettre ces propres signaux radio, c'est-à-dire de mettre en œuvre la procédure de Wi-FI CAC. Il ne peut donc pas transmettre ou de recevoir pendant ce laps de temps.
- une procédure de détection Wi-Fi (en anglais « Wi-Fi Sensing »), qui consiste à transmettre en continu pendant une période temporelle pour faire de l'analyse de variation à la réception de paquets de données. Cette action utilise des paquets Wi-Fi standards, mais avec une fréquence d'envoi élevée. En théorie, elle n'empêche pas directement la transmission ou la réception d'autres paquets de données Wi-Fi par l'appareil qui exécute la procédure, mais du fait qu'elle sature le canal radio, elle est susceptible de perturber la transmission ou la réception de certains types de flux de données, en particulier ceux associés à des fortes contraintes de latence et de pertes de paquets, comme par exemple un flux de données temps réel (en anglais, « live »), de type vidéo ou voix. En outre, cette procédure de Wi-Fi Sensing implique non seulement le nœud agent qui déclenche cette action en transmettant des données vers un autre nœud sur un lien donné de la connexion qu'il a établie avec lui, mais aussi cet autre nœud, qui doit répondre aux données qu'il a reçues du nœud agent. L'action de Wi-Fi sensing sollicite donc deux nœuds du réseau sans fil simultanément.

Un inconvénient de ces actions de contrôle sur les points d'accès nœuds du réseau maillé est qu'elles perturbent les communications via les connexions établies entre eux, à des degrés variés, avec un impact plus ou moins fort sur la qualité de service ressentie par les utilisateurs des réseaux de communication sans fil correspondants.

### Résumé

L'invention vient améliorer la situation. En particulier, l'invention vise une solution pour adapter en amont la configuration des nœuds agents et de leurs connexions avec d'autres nœuds agents, susceptibles d'être impactés par l'exécution d'une de ces actions de contrôle, afin d'éviter ou au moins de limiter les perturbations sur leurs communications avec ces autres nœuds du réseau de communication sans fil.

Selon un premier aspect, un procédé de gestion d'une configuration d'une pluralité de nœuds d'un réseau de communication sans fil contrôlé par un nœud contrôleur est proposé, lesdits nœuds de la pluralité de nœuds étant configurés pour établir entre eux des connexions, dites multi-liens, comprenant au moins deux liens utilisant au moins deux bandes de fréquences distinctes, ledit procédé, mis en œuvre par un dispositif de gestion d'une configuration d'une pluralité de nœuds d'un réseau de communication sans fil, intégré au nœud contrôleur ou connecté à lui par une interface de communication, comprenant les étapes de :
- obtention d'une information relative à une action de contrôle sur une desdites bandes de fréquences, programmée pour être exécutée par au moins undit nœud, dit nœud exécutant, et susceptible de perturber des communications sur une ou plusieurs connexions multi-liens établies entre le nœud exécutant et un ou plusieurs autres nœuds du réseau de communication sans fil ;
- déclenchement de l'émission, par le nœud contrôleur, à destination d'au moins un nœud, dit nœud impacté, de la pluralité de nœuds, ledit au moins un nœud impacté comprenant ledit au moins un nœud exécutant, et au moins un autre nœud de la pluralité de nœuds, avec lequel ledit au moins un nœud exécutant a établi au moins une connexion multi-liens, dont au moins un lien, dit lien impacté, utilise ladite bande de fréquences sur laquelle l'action de contrôle est programmée, d'une requête de modification de configuration de ladite au moins une connexion, pour le lien impacté, ladite modification de configuration étant fonction de ladite action de contrôle et comprenant une commande de suppression d'une autorisation de transmission et de ré
   ception de données sur ledit lien impacté pour au moins un type de flux de données ; et
- sur réception, en provenance dudit au moins undit nœud impacté, d'une confirmation de modification de configuration de ladite au moins une connexion, émission à destination dudit nœud contrôleur d'une information indiquant que ladite action de contrôle programmée sur ladite bande de fréquences est prête à être exécutée.

La solution proposée repose sur une approche tout-à-fait nouvelle et inventive du contrôle des nœuds agent d'un réseau sans fil par un nœud contrôleur, qui consiste à anticiper les perturbations engendrées par l'exécution d'une action de contrôle sur un ou plusieurs nœuds du réseau sans fil, en leur commandant de modifier la configuration de leurs connexions multi-liens qui seront impactées par cette action de contrôle, avant l'exécution de cette action de contrôle. Un avantage est d'exploiter la connaissance dont dispose nativement le nœud contrôleur des connexions établies par chacun des nœuds du réseau sans fil et de leur état pour coordonner une modification des configurations de leurs connexions multi-liens, avant de déclencher l'exécution de l'action de contrôle en question. La modification de configuration commandée dépend de l'action de contrôle programmée et les nœuds auxquels elle s'applique dépend de la configuration du réseau sans fil.

De la sorte, les perturbations sur les communications entre les nœuds agents en question et d'autre nœuds sont évitées, voire minimisées.

L'invention s'applique à tout réseau de communication sans fil dont les nœuds sont des points d'accès qui communiquent entre eux en utilisant (simultanément) plusieurs liens mettant en œuvre des bandes de fréquences distinctes. Par exemple, le réseau sans fil est un réseau maillé.

Elle s'applique tout particulièrement, mais non limitativement à une pluralité de points d'accès à des réseaux de communication sans fil de type Wi-Fi mettant en œuvre la norme IEEE802.11be, de la famille IEEE802.11, ou Wi-Fi 7 ou une de ses versions ultérieures, reliés entre eux pour former des nœuds d'un réseau maillé contrôlé par un nœud contrôleur, conformément à la norme appelée EasyMesh, dans sa version actuelle ou une de ses versions ultérieures.

Selon un ou plusieurs modes de réalisation, le procédé comprend en outre les étapes de :
- obtention d'un rapport d'exécution de ladite action de contrôle sur ladite bande de fréquences, reçu par ledit nœud contrôleur en provenance dudit au moins un nœud exécutant, et
- émission, à destination dudit au moins un nœud impacté, d'une requête de rétablissement de la configuration de ladite au moins une connexion.

Une fois l'action de contrôle exécutée, le nœud contrôleur commande au dit au moins un nœud impacté de rétablir les configurations de ses connexions. De la sorte, il retrouve ses connexions dans l'état où elles se trouvaient avant l'exécution de l'action de contrôle par le nœud exécutant.

La modification de configuration commandée par le nœud contrôleur aux nœuds agents dépend de la nature de l'action de contrôle et peut aller d'une suppression d'une autorisation de transmission et de réception de données sur la bande de fréquences concernée par l'action de contrôle pour au moins un type de flux donné à une suppression totale, quelle que soit le type de flux. Dans le cas d'une telle suppression totale ou partielle, les autres liens de la connexion seront utilisés pour transmettre les données d'un flux dudit au moins un type concerné. Un avantage de cette modification de la configuration des connexions des nœuds agents du réseau de communication sans fil est qu'elle est adaptée de façon proportionnée à l'action de contrôle.

Selon un ou plusieurs modes de réalisation, le procédé comprend l'obtention d'une information relative à un type de modification de configuration, au moins en fonction de l'information relative à l'action de contrôle et, lorsque l'information relative à un type de modification de configuration comprend une interruption du trafic de données sur ledit lien impacté, ladite commande de suppression d'une autorisation de transmission et de réception de données sur ledit lien concerne tous les types de flux de données de la connexion multi-liens et, lorsque l'information relative à un type de modification de configuration comprend une réduction du trafic de données sur ledit lien impacté, ladite suppression d'une autorisation de transmission et de réception de données sur ledit lien ne concerne pas tous les types de flux de données.

Par exemple, pour une action de contrôle de type balayage d'une bande de fréquences donnée de type vérification d'une disponibilité d'une bande de fréquences donnée, la modification de configuration consiste à interrompre totalement le trafic sur le lien impacté. En revanche, pour une action de contrôle du type analyse de variation à la réception de données sur une bande de fréquences donnée (Wi-Fi sensing), le trafic de données peut être seulement réduit, en supprimant l'utilisation du lien impactés pour certains types de flux de données.

Par exemple, le type de flux concerné par cette suppression est un type de flux associé à des contraintes de latence fortes, par exemple un flux temps réel de type vidéo ou voix.

Selon un ou plusieurs modes de réalisation, le procédé comprend en outre l'obtention d'une liste desdits nœuds impactés par ladite action de contrôle, ladite liste comprenant ledit au moins un nœud exécutant et au moins un autre nœud connecté audit au moins équipement nœud par une connexion multi-liens comprenant ledit lien impacté, et en ce que la requête de notification de modification de configuration dudit lien est émise à destination des nœuds impactés de ladite liste.

Un avantage de la solution proposée est qu'elle s'appuie sur une connaissance de l'impact de l'action de contrôle programmée sur les nœuds du réseau de communication sans fil, pour coordonner ces nœuds de sorte qu'ils ne transmettent plus de données sur le lien utilisant la bande de fréquences qui fait l'objet de l'action de contrôle ou seulement des types de flux qui supportent la perturbation engendrée.

Selon un ou plusieurs modes de réalisation, le procédé comprend en outre l'étape d'obtention, en provenance de la pluralité de nœuds dudit réseau, d'informations relatives à un niveau de signal radio reçu de nœuds voisins, et en ce que la liste des nœuds impactés par ladite action de contrôle programmée est déterminée au moins à partir desdites informations reçues et d'un seuil minimal de niveau de signal radio reçu.

Par exemple, le nœud contrôleur commande à la pluralité de nœuds agents du réseau de communication sans fil de mettre en œuvre une procédure de rapport de voisinage, telle que par exemple définie par la norme IEEE 802.11k. Une telle procédure consiste pour un nœud agent à écouter ses voisins et, pour chaque signal radio détecté à déterminer une information de niveau de signal radio reçu. Le nœud agent compile les informations dans un rapport de voisinage structuré qu'il transmet au nœud contrôleur.

Le nœud contrôleur l'exploite ensuite évaluer, pour chaque nœud du réseau maillé, à partir de l'information de niveau de signal radio reçu de la pluralité de nœuds et du seuil minimal de niveau de signal reçu, une mesure de portée. A partir de cette mesure de portée, il peut déterminer quel nœud est « visible » de quel autre nœud et par conséquent, quels nœuds du réseau maillé seront impactés par l'exécution d'une action de contrôle par le nœud exécutant.

De la sorte, le nœud contrôleur établit de façon simple et efficace une étude d'impact de l'action de contrôle à venir.

Selon un deuxième aspect, un procédé de traitement d'une requête de modification d'une configuration d'un nœud à un réseau de communication sans fil est proposé, ledit réseau de communication sans fil comprenant une pluralité de nœuds, lesdits nœuds de la pluralité de nœuds étant configurés pour établir entre eux des connexions, dites multi-liens, comprenant au moins deux liens utilisant au moins deux bandes de fréquences distinctes , ledit réseau de communication sans fil étant contrôlé par un nœud contrôleur , ledit procédé comprenant les étapes de :
- réception d'une requête de modification de configuration d'une dite au moins une connexion multi-liens, établie par le nœud avec au moins un autre nœud dudit réseau de communication sans fil, ladite requête ayant été émise par un nœud contrôleur dudit réseau maillé sans fil conformément au procédé de gestion et reçue par ledit nœud en provenance d'un nœud contrôleur dudit réseau maillé sans fil, ladite requête comprenant une commande de suppression d'une autorisation de transmission et de réception de données sur le lien utilisant une bande de fréquences donnée, pour au moins un type de flux de données,
- déclenchement de l'émission par ledit nœud vers ledit au moins un autre nœud d'une première requête de renégociation de ladite connexion, mettant en œuvre ladite commande de suppression d'une autorisation de transmission et de réception de données sur ledit lien pour ladite au moins une connexion, pour le au moins un type de flux de données, et
- suite à la renégociation de ladite connexion, déclenchement de l'émission par ledit nœud d'un message comprenant un rapport d'exécution de la modification de configuration à destination du nœud contrôleur.

Avec la solution proposée, tout nœud du réseau sans fil, est configuré pour reconfigurer ses connexions avec d'autres équipements d'accès, sur requête du et selon les termes prescrits par le nœud contrôleur. De la sorte, ce dernier peut déclencher cette reconfiguration en amont de l'exécution d'une action de contrôle à venir sur ce nœud ou sur un autre nœud du réseau sans fil auquel le nœud est connecté.

Selon un ou plusieurs modes de réalisation, le procédé comprend en outre les étapes de :
- réception d'une requête de rétablissement de la configuration, en provenance du nœud contrôleur, ladite requête comprenant une commande d'ajout d'une autorisation de transmission et de réception de données sur ledit lien pour ladite au moins une connexion, pour ledit au moins un type de flux,
- déclenchement de l'émission par ledit nœud, à destination de l'au moins un autre nœud, d'une deuxième requête de renégociation de ladite au moins une connexion, mettant en œuvre la commande d'ajout d'une autorisation de transmission et de réception de données sur ledit lien pour ladite au moins une connexion, pour ledit au moins un type de flux, et
- déclenchement de l'émission par ledit nœud d'un message comprenant un rapport d'exécution du rétablissement de la configuration de ladite au moins une connexion.

Le rétablissement de la configuration initiale est mis en œuvre de façon analogue, ce qui permet au nœud de retrouver l'état de ses connexions avec d'autres points d'accès avant la reconfiguration. Avantageusement, cette procédure de rétablissement de configuration s'opère suite à l'exécution de l'action de contrôle par le nœud ou par un autre nœud auquel il est connecté.

Selon un ou plusieurs modes de réalisation, lorsque ledit nœud est connecté à une pluralité de nœuds par des connexions mettant en œuvre un lien utilisant la bande de fréquences données, undit message de requête de modification de configuration est émis à destination de ladite pluralité d'autres nœuds.

Selon un ou plusieurs modes de réalisation, la première, respectivement deuxième requête de renégociation de ladite au moins une connexion comprend une information indiquant une liste des liens autorisés pour ladite au moins une connexion.

De la sorte, ladite liste comprise dans la première, respectivement la deuxième requête vient remplacer la liste des liens autorisés qui était précédemment applicable. Ainsi, il suffit de retirer le lien à supprimer pour ledit au moins flux de données de la liste de la première requête et de le réintégrer à la liste de la deuxième requête.

Selon un troisième aspect, un dispositif de gestion d'une configuration d'une pluralité de nœuds d'un réseau de communication sans fil contrôlé par un nœud contrôleur est proposé, lesdits nœuds de la pluralité de nœuds étant configurés pour établir entre eux des connexions, dites multi-liens, comprenant au moins deux liens utilisant au moins deux bandes de fréquences distinctes, ledit dispositif étant intégré au nœud contrôleur ou connecté à lui par une interface de communication, ledit dispositif comprenant au moins ladite interface de communication, une mémoire et un processeur connecté à ladite au moins une interface de communication et à la mémoire pour en commander le fonctionnement et configuré pour :
- obtenir une information relative à une action de contrôle sur une desdites bandes de fréquences, ladite action de contrôle étant programmée pour être exécuté par au moins un nœud dudit réseau , dit nœud exécutant, et susceptible de perturber des communications sur une ou plusieurs connexions multi-liens établies entre le nœud exécutant et un ou plusieurs autres nœuds du réseau de communication sans fil ;
- déclencher l'émission à destination d'au moins un nœud, dit nœud impacté, de la pluralité de nœuds, ledit au moins un nœud impacté comprenant ledit au moins un nœud exécutant et au moins un autre nœud de ladite pluralité de nœuds, avec lequel le nœud exécutant a établi au moins une connexion, dont au moins un lien, dit lien impacté, utilise ladite bande de fréquences sur laquelle l'action de contrôle est programmée, une requête de modification de configuration de ladite au moins une connexion, pour le lien impacté, ladite modification de configuration étant fonction de ladite action de contrôle et comprenant une commande de suppression d'une autorisation de transmission et de réception de données sur ledit lien impacté pour au moins un type de flux de données ; et
- sur réception, en provenance dudit au moins undit nœud impacté, d'une confirmation de modification de configuration de ladite au moins une connexion, émettre à destination dudit nœud contrôleur une information indiquant que ladite action de contrôle programmée sur ladite bande de fréquences est prête à être exécutée.

Selon au moins un mode de réalisation, ledit dispositif comprend au moins un processeur et au moins une mémoire comprenant un code de programme informatique, la au moins une mémoire et le code de programme informatique étant configurés pour, avec l'au moins un processeur, provoquer l'exécution dudit dispositif.

Selon au moins un mode de réalisation, un tel dispositif met en œuvre le procédé de gestion selon le premier aspect, dans ses différents modes de réalisation.

Selon un quatrième aspect, un dispositif de traitement d'une requête de modification d'une configuration d'un nœud d'un réseau de communication sans fil comprenant une pluralité de nœuds connectés entre eux par des connexions, dites multi-liens, comprenant au moins deux liens utilisant des bandes de fréquences distinctes, ledit réseau étant contrôlé par un nœud contrôleur, ledit nœud ayant établi au moins une connexion avec un autre nœud dudit réseau, ledit dispositif étant intégré audit nœud, ledit dispositif comprenant au moins une interface de communication, une mémoire et un processeur connecté à ladite au moins une interface de communication et à la mémoire pour en commander le fonctionnement et configuré pour :
- recevoir une requête de modification de configuration d'au moins une connexion multi-liens, pour le lien de ladite pluralité de liens utilisant une bande de fréquences donnée émise par le dispositif de gestion précité en provenance d'un nœud contrôleur dudit réseau maillé sans fil, ladite requête comprenant une commande de suppression d'une autorisation de transmission et de réception de données sur ledit lien pour ladite au moins une connexion, pour au moins un type de flux de données,
- déclencher une émission par ledit nœud vers ledit au moins un autre nœud d'une première requête de renégociation de ladite connexion, mettant en œuvre ladite commande de suppression d'une autorisation de transmission et de réception de données sur ledit lien pour ladite au moins une connexion, pour au moins un type de flux de données, et
- suite à la renégociation de ladite connexion, déclencher une émission par ledit nœud d'un message comprenant un rapport d'exécution de la modification de configuration à destination du nœud contrôleur.

Selon au moins un mode de réalisation, ledit dispositif de traitement précité comprend au moins un processeur et au moins une mémoire comprenant un code de programme informatique, la au moins une mémoire et le code de programme informatique étant configurés pour, avec l'au moins un processeur, provoquer l'exécution dudit dispositif.

Selon au moins un mode de réalisation, un tel dispositif met en œuvre le procédé de traitement selon le deuxième aspect, dans ses différents modes de réalisation.

Selon un cinquième aspect, un équipement d'accès à un réseau de communication sans fil formant un nœud d'un réseau de communication sans fil comprenant une pluralité de nœuds est proposé, lesdits nœuds de la pluralité de nœuds étant configurés pour établir entre eux des connexions, dites multi-liens, comprenant au moins deux liens utilisant des bandes de fréquences distinctes, ledit nœud ayant établi au moins une dite connexion multi-liens, comprenant au moins deux liens utilisant les au moins deux bandes de fréquences distinctes, l'équipement d'accès comprenant un dispositif de traitement selon le quatrième aspect.

Selon un ou plusieurs modes de réalisation, l'équipement d'accès selon est dit nœud exécutant et en outre configuré pour :
- recevoir, en provenance d'un nœud contrôleur dudit réseau de communication sans fil, une commande d'exécution d'une action de contrôle sur une desdites bandes de fréquences,
- suite à l'exécution de l'action de contrôle, émettre un rapport d'exécution de l'action à destination de l'équipement nœud contrôleur.

Selon un sixième aspect, un réseau de communication sans fil comprenant une pluralité de nœuds est proposé, lesdits nœuds étant des équipements d'accès selon le cinquième aspect et au moins un dispositif de gestion selon le troisième aspect.

Le dispositif de gestion peut être embarqué dans un équipement nœud de contrôle. Le nœud contrôleur peut être un des équipements d'accès nœuds du réseau. En alternative il peut être distribué dans la pluralité d'équipements d'accès formant les nœuds du réseau de communication sans fil.

Le réseau de communication sans fil, les équipements d'accès et le dispositif de gestion présentent les mêmes avantages que le procédé de gestion précité.

Selon un septième aspect, un programme d'ordinateur est proposé, comprenant des instructions pour l'exécution d'un procédé selon le premier aspect, lorsque ledit programme est exécuté par un ordinateur.

Selon un huitième aspect, un support d'enregistrement non volatile et lisible par un ordinateur est proposé, sur lequel est enregistré le programme d'ordinateur selon le septième aspect.

Selon un neuvième aspect, un programme d'ordinateur comprenant des instructions pour l'exécution d'un procédé selon le deuxième aspect, lorsque ledit programme est exécuté par un ordinateur.

Selon un dixième aspect, un support d'enregistrement non volatile et lisible par un ordinateur est proposé, sur lequel est enregistré le programme d'ordinateur selon le neuvième aspect.

### Brève description des dessins

D'autres caractéristiques et avantages apparaitront au cours de la lecture de la description détaillée qui va suivre pour la compréhension de laquelle on se reportera aux dessins annexés parmi lesquels :
[Fig. 1] illustre de façon schématique un dispositif de gestion d'une pluralité de nœuds d'un réseau sans fil et des dispositifs de traitement d'une requête de modification d'une configuration d'une connexion multi-liens entre des nœuds d'un réseau sans fil, lesdits nœuds étants des équipements d'accès à des réseaux de communication sans fil, selon un exemple de réalisation particulier non limitatif;
[Fig. 2] illustre de façon schématique un exemple de chemins empruntés par des flux de paquets de données échangés via une connexion multi-liens entre deux nœuds du réseau sans fil;
[Fig. 3] présente sous forme de logigramme les étapes d'un procédé de gestion d'une pluralité de nœuds d'un réseau sans fil, selon un exemple de réalisation particulier non limitatif;
[Fig. 4] détaille sous forme de logigramme l'obtention d'une liste des nœuds du réseau sans fil impactés par une action de contrôle programmée pour être exécutée par un nœud du réseau sans fil, selon un exemple de réalisation particulier non limitatif;
[Fig. 5] présente sous forme de logigramme les étapes d'un procédé de traitement d'une requête de modification d'une configuration d'une connexion multi-liens établie par un nœud du réseau sans fil avec un autre nœud de ce réseau, selon un exemple de réalisation particulier non limitatif;
[Fig. 6] illustre de façon schématique un exemple de messages de renégociation d'une connexion multi-liens entre deux nœuds du réseau sans fil, selon un mode de réalisation ;
[Fig. 7] présente les flux de messages échangés entre un nœud contrôleur et un nœud du réseau sans fil pour modifier la configuration d'une connexion multi-liens établie par ce nœud, avant l'exécution d'une action de contrôle programmée de type Wi-Fi Scan, selon un exemple de réalisation particulier non limitatif;
[Fig. 8] illustre de façon schématique un exemple de chemins empruntés par des flux de paquets de données échangés via les connexions multi-liens entre des nœuds du réseau sans fil, après une modification de leurs configuration avant l'exécution d'une action de contrôle de type Wi-Fi Scan sur une bande de fréquences donnée, selon un exemple de réalisation particulier non limitatif;
[Fig. 9] illustre de façon schématique des zones d'impacts des nœuds sur d'autres nœuds d'un réseau sans fil, selon un exemple de réalisation particulier non limitatif;
[Fig. 10] présente les flux de messages échangés entre un nœud contrôleur et des noeuds agents d'un réseau sans fil pour modifier les configurations de leurs connexions multi-liens respectives, avant l'exécution d'une action de contrôle programmée de type Wi-Fi Sensing, selon un exemple de réalisation particulier non limitatif;
[Fig. 11] illustre de façon schématique un exemple de chemins empruntés par des flux de paquets de données échangés via les connexion multi-liens entre les nœuds du réseau maillé, après une modification de leurs configuration avant l'exécution d'une action de contrôle de type WiF6 Sensing sur une bande de fréquences données, selon un exemple de réalisation particulier non limitatif;
[Fig. 12A] présente à titre d'exemple un tableau de valeurs d'un élément d'information (TID - To-Link Mapping) indiquant une liste des liens autorisés pour une connexion multi-liens ;
[Fig. 12B] illustre de façon schématique un exemple de configuration nominale d'une connexion multi-liens, selon laquelle tous les types de trafic sont autorisés sur tous les liens ;
[Fig. 12C] illustre de façon schématique un exemple de configuration modifiée d'une connexion multi-liens, selon laquelle certains types de trafic ne sont pas autorisés sur un lien donné ;
[Fig. 13] illustre de façon schématique un exemple de structure matérielle d'un dispositif de contrôle, respectivement de modification d'une configuration, selon un ou plusieurs modes de réalisation de l'invention.

### Description des modes de réalisation

Dans la description qui va suivre, des éléments identiques, similaires ou analogues seront désignés par les mêmes chiffres de référence. Sauf indication contraire, les diagrammes ne sont pas nécessairement à l'échelle.

Les diagrammes blocs, algorigrammes et diagrammes de séquence de messages dans les figures illustrent l'architecture, les fonctionnalités et le fonctionnement de systèmes, dispositifs, procédés et produits programmes d'ordinateur selon un ou plusieurs exemples de réalisation. Chaque bloc d'un diagramme bloc ou chaque phase d'un algorigramme peut représenter un module ou encore une portion de code logiciel comprenant des instructions pour l'implémentation d'une ou plusieurs fonctions. Selon certaines implémentations, l'ordre des blocs ou des phases peut être changé, ou encore les fonctions correspondantes peuvent être mises en œuvre en parallèle.

Les exemples de réalisation qui vont maintenant être décrits, se placent, de façon non limitative, dans le contexte de réseaux conformes à la famille des standards 802.11 de l'Institute of Electrical and Electronics Engineers « IEEE », ou réseaux dits de type 'Wi-Fi'. Des exemples de réalisation peuvent se placer par exemple dans le contexte de l'amendement IEEE 802.11be, dans sa version D4.0 ou sa version D5.0, ou dans ses versions ultérieures ou sa version définitive. D'autres exemples de réalisation peuvent également se placer par exemple dans le contexte d'une version de norme IEEE 802.11 ou d'un amendement à cette norme 802.11 incorporant l'amendement IEEE 802.11be, comme par exemple l'amendement IEEE 802.11bf D3.0 ou l'amendement IEEE 802.11bn. Ils concernent aussi bien un réseau sans fil domestique qu'un réseau d'entreprise.

Dans ce qui suit, on considère en particulier des équipements d'accès ou points d'accès (en anglais, « Access Point »), c'est-à-dire un dispositif matériel qui permet à des stations, c'est-à-dire des appareils, de type terminaux utilisateurs, tels qu'un ordinateur portable, un téléphone intelligent, une tablette, etc ou de type objets connectés ou loT (en anglais, « Internet of Thing »), de se connecter au réseau de communication local ou LAN (pour « Local Access Network ») en anglais), via une connexion sans fil. Un tel point d'accès crée un réseau local sans fil dans une zone déterminée, en fournissant une couverture radio pour les appareils situés à proximité. Il est généralement connecté à un réseau de communication étendu ou WAN (de l'anglais, « Wide Access Network »), par exemple filaire, et agit comme une passerelle (en anglais, « gateway ») entre les appareils et le réseau filaire, leur permettant de communiquer avec d'autres appareils connectés au réseau étendu et d'accéder à Internet si le point d'accès est connecté à un routeur Internet.

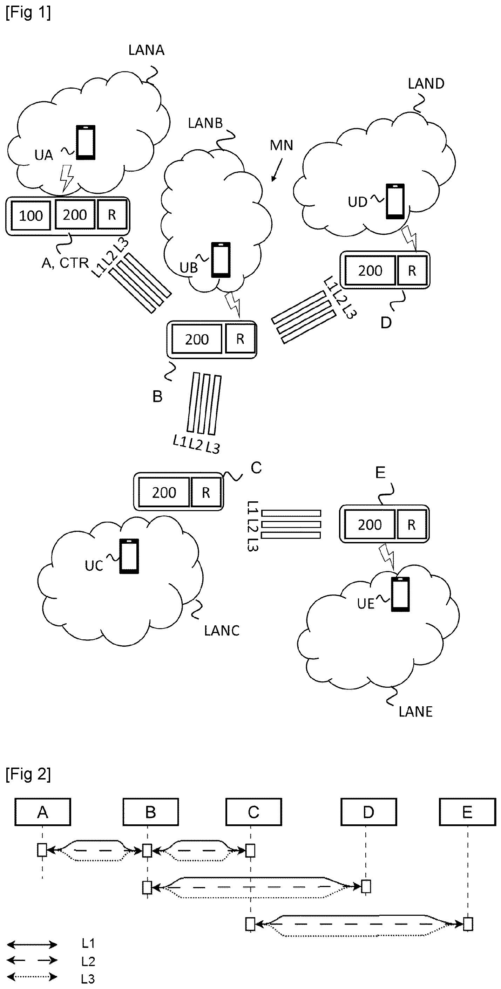

Plus précisément, en relation avec la Fig. 1, on considère une pluralité d'équipements d'accès connectés entre eux pour former des nœuds d'un réseau sans fil MN. Dans cet exemple, le réseau présente une structure en mailles et forme un réseau maillé. Bien sûr d'autres structures peuvent être envisagées, comme par exemple une organisation en étoile.

Dans cet exemple, un équipement d'accès A à un réseau local sans fil LANA est connecté par une connexion multi-liens MLO (de l'anglais, « Multi Link Operations ») CAB à un équipement d'accès B à un réseau local LANB. Cette connexion CAB comprend trois liens L1{A,B}, L2{A,B}, L3{A,B} utilisant chacun une des trois bandes de fréquences distinctes définies par les protocoles Wi-Fi 6E incorporant l'amendement IEEE 802.11ax-2021 et Wi-Fi 7 incorporant l'amendement IEEE 802.11be, respectivement 2.4GHz, 5GHz et 6GHz.

La variante IEEE 802.11be, ou aussi dénommée et référée sous ce sigle ci-après, Wi-Fi7, définit la notion de connexion multi-liens et des messages permettant de d'établir et de gérer une telle connexion. La norme Wi-Fi7 permet d'établir une connexion entre deux appareils sur une bande de fréquences donnée, puis de négocier des modes de transmission sur les autres bandes de fréquences communes entre les deux équipements afin qu'ils puissent transmettre et recevoir des données sur les différentes bandes de fréquences simultanément. Elle permet aussi de négocier en temps réel les bandes de fréquences ou liens à utiliser pour transmettre et recevoir des données via cette connexion.

Dans l'exemple de la Fig. 1, l'équipement d'accès B est lui-même connecté à un équipement d'accès C à un réseau local LANC par une connexion multi-liens CBC et à un équipement d'accès D à un réseau local LAND par une connexion multi-liens CBD. Enfin, l'équipement d'accès C est connecté par une connexion multi-liens CDE à un équipement d'accès E à un réseau local LANE.

Les nœuds C et D sont connectés au nœud B et ont chacun négocié une connexion multi-liens sur les 3 bandes de fréquences qu'on note respectivement L1{B,C}, L2{B,C}, L3{B,C}et L1{B,D}, L2{B,D}, L3{B,D}.

A titre d'exemple purement illustratif, on a représenté un terminal utilisateur UA connecté au réseau local LANA, un terminal utilisateur UB connecté au réseau local LANB, un terminal utilisateur UC connecté au réseau local LANC, un terminal utilisateur UD connecté au réseau local LAND et un terminal utilisateur UE connecté au réseau local LANE. Les terminaux utilisateurs UA-UE (ou stations ou STAs dans la terminologie de l'une des normes de la famille IEEE 802.11) sont par exemple un téléphone intelligent, un ordinateur, une tablette ou encore un objet connecté.

Le réseau maillé sans fil MN est par exemple construit conformément à la norme EasyMesh qui décrit des mécanismes et des messages permettant à ses nœuds de se coordonner entre eux. Plus précisément, le réseau maillé MN est construit à travers la configuration d'un nœud contrôleur (non représenté sur la Fig. 1) configuré pour contrôler la configuration des nœuds A-E du réseau sans fil MN. Il convient de noter que le nœud contrôleur est généralement un équipement d'accès au même titre que les autres nœuds A-E.

Ainsi, dans le réseau maillé MN de la Fig. 1, chaque nœud A-E met en œuvre la norme Wi-Fi7 sur les trois bandes de fréquences 2,4GHz, 5GHz et 6GHz ainsi que la norme EasyMesh (par exemple les versions ou révisions 5.0, et celles ultérieures compatibles avec les précédentes) pour construire et gérer le réseau maillé MN. Par exemple, la norme EasyMesh est implémentée sur chacun des nœuds du réseau maillé à l'aide d'un programme logiciel, appelé agent.

En relation avec la Fig. 2, les nœuds C et D communiquent avec le nœud A à travers le nœud B sur les 3 liens de leurs connexions respectives. Sur la Fig. 2, on a représenté avec des flèches les flux de paquets échangés sur différents chemins entre les nœuds A-E. Les flèches en trait continu désignent les liens L1 utilisant la bande de fréquences 2,4GHz, celles en trait grands pointillés les liens L2 utilisant la bande de fréquences 5GHz et celles en petits pointillés les liens L3 utilisant la bande de fréquences 6GHz.

Les flux f1 de paquets de données échangés entre A et C à travers le lien L1 empruntent le chemin suivant :

A←→C(f1) : L1{A,B}+ L1{B,C}.

De même, le nœud E communique avec le nœud A à travers les nœuds B et C. Ainsi, l'ensemble des flux f1, f2, f3 s'écrit comme suit :
- Entre A et C :

   A←→C (f1) : L1{A,B} + L1{B,C}

   A←→C (f2) : L2{A,B} + L2{B,C}

   A←→C (f3) : L3{A,B} + L3{B,C}
- Entre A et D :

   A←→D (f1) : L1{A,B} + L1{B,D}

   A←→D (f2) : L2{A,B} + L2{B,D}

   A←→D (f3) : L3{A,B}(3) + L3{B,D}
- Entre A et E :

   A←→E (f1) : L1{A,B} + L1{B,C} + L1{C,E}

   A←→AE (f2) : L2{A,B} + L2{B,C} + L2{C,E}

   A←→E (f3) : L3{A,B} + L3{B,C} + L3{C,E}

Le nœud contrôleur CTR de la Fig. 1 est configuré pour programmer et déclencher la mise en œuvre d'une action de contrôle sur n'importe quel(s) nœud(s) du réseau maillé MN, y compris lui-même. Par exemple, cette action de contrôle est une des procédures précédemment décrites comprenant :
- la procédure d'analyse ou de balayage d'une bande de fréquences ou Wi-Fi Scan,
- la procédure de vérification d'une disponibilité d'un canal Wi-Fi ou Wi-Fi CAC, et
- la procédure de détection ou Wi-Fi Sensing.

Dans la suite, on désigne le ou les nœuds désignés pour exécuter l'action de contrôle en question, par nœud(s) exécutant(s).

Une telle action de contrôle est susceptible d'engendrer des perturbations plus ou moins sévères sur les flux de paquets de données échangés sur les connexions établies par le nœud exécutant avec d'autres nœuds du réseau maillé, avec des conséquences négatives sur la qualité de service perçue par les utilisateurs des réseaux de communications sans fil du nœud et des autres nœuds impactés.

Dans la suite, sont présentés des dispositifs et méthodes pour contrôler et modifier une configuration de connexions établies par le nœud exécutant avec d'autres nœuds de ce réseau maillé sans fil MN, avant la mise en œuvre par ce nœud exécutant d'une action de contrôle d'une bande de fréquences susceptible d'engendrer des perturbations sur les flux de paquets de données échangés par le nœud sur les liens des connexions établies par ce nœud utilisant cette bande de fréquences. Ces dispositifs et méthodes permettent d'anticiper la ou les perturbations en adaptant en amont les configurations des connexions concernées.

Selon un ou plusieurs modes de réalisation, le nœud contrôleur CTR comprend un dispositif 100 de gestion d'une pluralité de nœuds d'un réseau sans fil, tel que celui de la Fig. 1, dont les nœuds sont des points d'accès à des réseaux de communication sans fil. Un tel dispositif est configuré pour :
- obtenir une information relative à l'action de contrôle à exécuter sur une desdites bandes de fréquences par le au moins un nœud exécutant,
- déclencher l'émission par le nœud contrôleur, à destination d'au moins un nœud, dit nœud impacté, de la pluralité de nœuds, comprenant ledit au moins un nœud exécutant, ledit nœud impacté ayant établi au moins une connexion multi-liens avec au moins un autre nœud de ladite pluralité de nœuds, ladite au moins une connexion comprenant au moins deux liens utilisant des bandes de fréquences distinctes parmi lesquels un lien, dit lien impacté, utilise ladite bande de fréquences sur laquelle l'action de contrôle doit être exécutée, d'une requête de modification de configuration de ladite au moins une connexion multi-liens, pour le lien impacté, ladite modification de configuration étant fonction de ladite action de contrôle, et,
- sur réception par le nœud contrôleur, en provenance dudit au moins undit nœud impacté, d'une confirmation de modification de configuration de ladite au moins une connexion, émettre à destination dudit nœud contrôleur d'une information indiquant que ladite action de contrôle sur ladite bande de fréquences est prête à être exécutée.

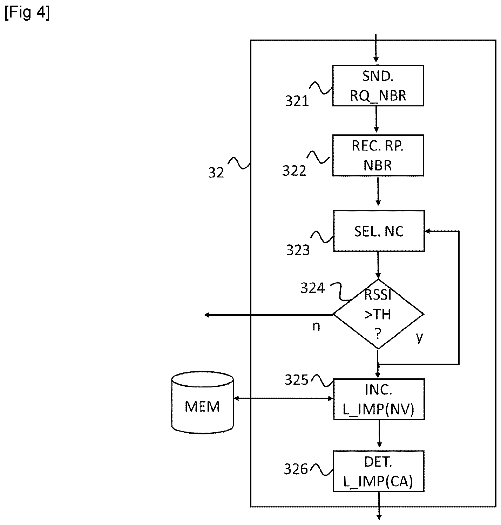

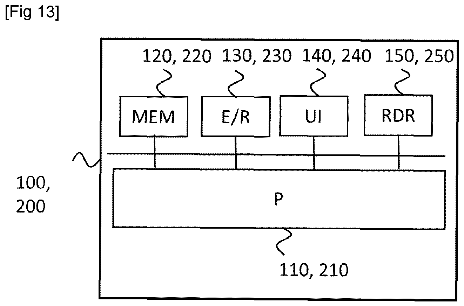

Ainsi, selon un ou plusieurs modes de réalisation, le dispositif 100 met en œuvre une méthode de gestion pluralité de nœuds d'un réseau sans fil qui sera décrite ci-après en relation avec la Fig. 4. Le dispositif 100 peut être mis en œuvre de diverses manières, logicielle et/ou matérielle. Un exemple de structure matérielle du dispositif 100 sera décrit ci-après en relation avec la Fig. 13.

Selon un ou plusieurs modes de réalisation, chaque nœud du réseau maillé MN comprend un dispositif 200 de traitement d'une requête de modification d'une configuration d'un nœud d'un réseau sans fil, ledit nœud ayant établi au moins une connexion multi-liens avec au moins un autre nœud dudit réseau, ledit dispositif étant configuré pour:
- obtenir une requête de modification de configuration d'au moins une connexion pour le lien de connexion multi- liens utilisant une bande de fréquences donnée, reçue par ledit nœud, en provenance du nœud contrôleur dudit réseau sans fil, ladite notification comprenant une commande de suppression d'une autorisation de transmission et de réception de données sur ledit lien pour ladite au moins une connexion, pour au moins un type de flux de données,
- déclencher l'émission par ledit nœud vers ledit au moins un autre nœud d'une première requête de renégociation de ladite connexion, mettant en œuvre ladite commande de suppression d'une autorisation de transmission et de réception de données sur ledit lien pour ladite au moins une connexion, pour le au moins un type de flux de données, et
- suite à la renégociation de ladite connexion, déclencher l'émission par ledit nœud d'un message comprenant un rapport d'exécution de la modification de configuration à destination du nœud contrôleur.

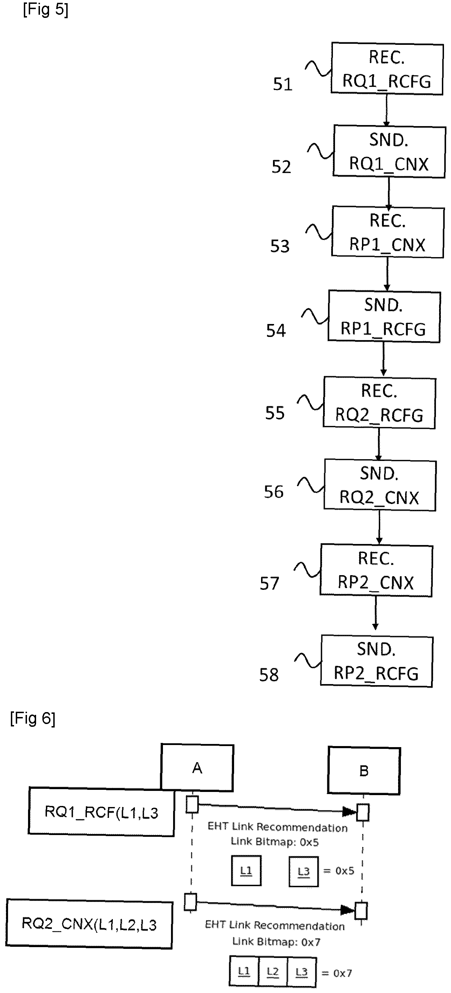

Ainsi, selon un ou plusieurs modes de réalisation, le dispositif 200 met en œuvre un procédé de traitement d'une modification d'une configuration d'une connexion qui sera décrite ci-après en relation avec la Fig. 5. Le dispositif 200 peut être mis en œuvre de diverses manières, logicielle et/ou matérielle. Un exemple de structure matérielle du dispositif 200 sera décrit ci-après en relation avec la Fig. 13.

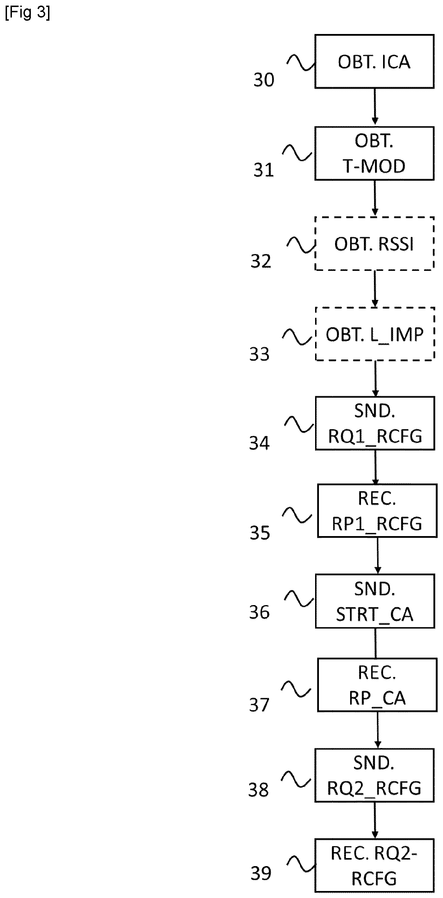

On présente désormais en relation avec la Fig. 3, un procédé de gestion d'une pluralité de nœuds d'un réseau de communication sans fil. Dans la suite, on considère que le procédé est mis en œuvre par un dispositif intégré à un nœud contrôleur, qui peut être l'un quelconque des nœuds du réseau maillé. Le nœud contrôleur se distingue des autres nœuds en ce qu'il est doté des fonctionnalités d'un contrôleur telles que spécifiées par exemple par la norme EasyMesh, alors que les autres nœuds sont dotés par la même norme de fonctionnalités pour exécuter les commandes du nœud contrôleur. Dans les deux cas, ces fonctionnalités peuvent être par exemple être implémentées dans le nœud sous la forme d'un programme informatique, appelé agent.

Dans la suite, on considère par exemple le nœud contrôleur CTR de la Fig. 1, qui correspond à l'équipement d'accès A.

Au cours d'une étape 30, le dispositif 100 du nœud contrôleur CTR obtient une information ICA relative à une action de contrôle CA programmée par le nœud contrôleur pour être exécutée sur une bande de fréquences donnée par au moins un nœud du réseau maillé MN, dit nœud exécutant. Cette information ICA comprend au moins un identifiant de l'action de contrôle CA et un identifiant du ou des nœuds qui doivent l'exécuter. Optionnellement, elle peut comprendre aussi des éléments d'informations complémentaires relatifs par exemple à un type de perturbation engendrée par l'exécution de cette action de contrôle sur la ou les connexions établies par le nœud avec d'autres nœuds du réseau maillé.

Au cours d'une étape 31, le dispositif 100 obtient une information T_MOD relative à un type de modification de configuration, au moins en fonction de l'information ICA relative à l'action de contrôle.

Selon l'action de contrôle CA à exécuter, le type de modification de configuration comprend une interruption du trafic de données sur ledit lien impacté ou une réduction du trafic de données sur ledit lien impacté, ladite suppression d'une autorisation de transmission et de réception de données sur ledit lien ne concerne pas tous les types de flux de données.

Selon un ou plusieurs modes de réalisation, l'information T_MOD relative à un type de modification est comprise dans l'information ICA en tant qu'élément d'information complémentaire. En alternative, elle est obtenue à partir de tout ou partie de l'information ICA, par exemple l'identifiant de l'action de contrôle CA qui est alors être utilisé comme index de recherche pour accéder aux éléments d'informations complémentaires qui sont stockés dans une mémoire, par exemple du dispositif 100 ou du nœud contrôleur CTR.

Selon l'action de contrôle CA programmée pour être exécutée, d'autres nœuds que le ou le nœud exécutant peuvent être impactés. Optionnellement, au cours d'une étape 33, le dispositif 100 obtient, au moins à partir de l'information ICA obtenue, une liste L_IMP des nœuds du réseau maillé qui seront impactés par l'exécution de l'action de contrôle CA au niveau du nœud exécutant. Cette liste comprend au moins le nœud exécutant.

Selon un ou plusieurs modes de réalisation, cette liste L_IMP est obtenue à partir d'informations relatives à un niveau de signal radio RSSI reçu par la pluralité de nœuds du réseau maillé en provenance des autres nœuds et d'un seuil TH donné de niveau minimal. Ces informations RSSI sont obtenues en 32 par le dispositif 100. Par exemple, il les lit dans une mémoire où elles ont été préalablement stockées, ou bien il les reçoit de certains des nœuds du réseau sans fil MN sur requête.

Cette deuxième option permet de prendre en compte l'état actuel du réseau MN et elle est illustrée par la Fig. 4. Le dispositif 100 déclenche l'envoi par le nœud contrôleur CTR, en 321, d'une requête de rapport de voisinage à certains nœuds de la pluralité de nœuds du réseau maillé MN.

Cette requête de rapport de voisinage commande au nœud qui la reçoit d'écouter une bande de fréquences données, typiquement celle concernée par l'action de contrôle programmée, et de déterminer, pour chaque signal radio détecté, une information relative à un niveau de signal radio reçu RSSI (de l'anglais, « Received Signal Strength indication »). Par exemple, le nœud met en œuvre une procédure de rapport de voisinage (de l'anglais, « Neighbor Report ») telle que spécifiée par la norme IEEE 802.11k-2008, qui permet à un point d'accès Wi-Fi (AP) de collecter des informations sur les points d'accès voisins et qui fonctionne comme suit :
- Le nœud envoie une requête de voisinage (Neighbor request) aux autres AP voisins pour obtenir des informations sur leurs réseaux et leurs capacités,
- Les nœuds voisins répondent à la demande dans une réponse de voisinage (Neighbor response) comprenant des informations relatives à leur identité et leur capacité, notamment les différentes bandes de fréquences qu'ils sont capables d'utiliser,
- Le nœud écoute la bande de fréquences données et détermine pour chaque signal radio reçu d'un autre point d'accès, typiquement une trame balise, une information RSSI,
- Le nœud compile les informations reçues dans un rapport de voisinage structuré. Ce rapport est ensuite transmis au nœud demandeur, ici le nœud contrôleur, par exemple à l'aide d'un message conforme au protocole EasyMesh.

Le dispositif 100 obtient les rapports de voisinage reçus par le nœud contrôleur des nœuds concernés du réseau MN en 322.

Le dispositif 100 est configuré pour exploiter les informations RSSI reçues d'un nœud de la pluralité de nœuds points d'accès pour déterminer une mesure de portée de chacun d'eux. Pour ce faire, en 323 il sélectionne un nœud courant NC et pour chacune des informations RSSI contenues dans son rapport de voisinage, il utilise en 324 un seuil TH donné, par exemple fixé à -75dBm et compare la valeur de cette information RSSi de niveau de signal radio reçu d'un nœud voisin NV par le nœud courant NC au seuil TH. Si l'information de niveau de signal reçu du nœud voisin NV est supérieure au seuil donné TH, il considère qu'une transmission du nœud voisin occupe le medium radio du nœud courant et donc que le nœud courant est à portée du nœud voisin. Autrement dit, si le nœud voisin NV exécute une action de contrôle sur la bande de fréquences, le nœud courant NC sera potentiellement impacté.

Le dispositif 100 ajoute alors le nœud courant NV à une liste d'impact L_IMP(NV) du nœud voisin. Sinon, lorsque l'information RSSI est inférieure ou égale au seuil TH, il considère que le nœud voisin n'est pas « visible » du nœud courant et passe à l'information RSSI reçue d'un autre nœud voisin par le nœud courant. Il réitère l'opération pour toutes les informations RSSI du rapport de voisinage du nœud courant.

Une fois le rapport de voisinage du nœud courant traité, il passe à un nœud suivant et réitère les opérations précédemment décrites, jusqu'à ce que la pluralité de nœuds soit traitée.

Cette analyse lui permet de construire une liste d'impact pour chaque nœud de la pluralité de nœuds. En 326, il fait l'union des listes d'impact associées au(x) nœuds exécutants et il obtient la liste L_IMP(CA) des nœuds impactés par l'action de contrôle CA programmée.

Au cours d'une étape 34, le dispositif 100 émet à destination du ou des nœuds impactés de la liste L_IMP un message comprenant une première notification ou requête RQ1_RCFG de modification de configuration de sa ou ses connexions avec d'autres nœuds comprenant un lien qui utilise la bande de fréquences donnée, dit lien impacté.

Ce message peut être envoyé sur un ou plusieurs liens de la ou des connexions multi-liens. Un avantage de l'envoyer sur tous les liens est d'augmenter les chances qu'il soit reçu par le nœud destinataire.

La modification de configuration demandée est fonction de l'action de contrôle et notamment du type de perturbation qu'elle est susceptible d'engendrer. Selon un ou plusieurs modes de réalisation, la requête de modification de configuration est construite à partir du type de modification T_MOD obtenu en 31.

En particulier, lorsque le type de modification de configuration T_MOD comprend une réduction de la connexion sur le lien impacté, la requête de modification de configuration de ladite au moins une connexion comprend une notification de suppression d'une autorisation de transmission et de réception de données sur ledit lien impacté pour au moins un type de flux de données.

En revanche, lorsque le type de modification de configuration T_MOD comprend une interruption de la connexion sur le lien impacté, la requête de modification de configuration de ladite au moins une connexion comprend une notification de suppression d'une autorisation de transmission et de réception de données sur ledit lien impacté pour tous les types de flux de données.

Par exemple, pour une action de contrôle CA de type balayage d'une bande de fréquences donnée (Wi-Fi scan) de type vérification d'une disponibilité d'une bande de fréquences donnée (Wi-Fi CAC), la modification de configuration consiste à interrompre totalement le trafic sur le lien impacté. En revanche, pour une action de contrôle du type analyse de variation à la réception de données sur une bande de fréquences donnée (Wi-Fi sensing), le trafic de données peut être seulement réduit, en supprimant l'utilisation du lien impactés pour certains types de flux de données.

Par exemple, le type de flux concerné par cette suppression est un type de flux associé à des contraintes de latence fortes, par exemple un flux temps réel de type vidéo ou voix.

Au cours d'une étape 35, le dispositif 100 reçoit de la part du ou des nœuds impactés un message RP1_RCFG d'acquittement de la modification de la configuration demandée, comprenant par exemple un rapport d'exécution.

Au cours d'une étape 36, le dispositif 100 informe le nœud contrôleur, par exemple en lui envoyant un message STRT-CA, que les modifications de configuration requises ont été effectuées et qu'il peut déclencher l'exécution de l'action de contrôle CA sur ladite bande de fréquences.

Au cours d'une étape 37, il obtient en provenance du nœud de contrôle CTR une information END_CA de fin d'exécution de l'action de contrôle par le ou les nœud(s) exécutant(s), par exemple il obtient un message comprenant par exemple un rapport d'exécution de l'action de contrôle CA reçu du nœud contrôleur en provenance du nœud exécutant.

En 38, le dispositif 100 déclenche l'émission par le nœud contrôleur d'un message comprenant une deuxième requête ou notification de modification de configuration RQ2_RCFG à destination des nœuds impactés. Il comprend une requête de rétablissement de la configuration de ladite au moins une connexion. De même, ce message peut être envoyé sur un ou plusieurs liens de la ou des connexions multi-liens. Un avantage de l'envoyer sur tous les liens est d'augmenter les chances qu'il soit reçu par le nœud destinataire.

Au cours d'une étape 39, le dispositif 100 obtient un deuxième message RP2_RCFG d'acquittement de la modification de la configuration, reçu du nœud contrôleur de la part du ou des nœuds impactés et comprenant par exemple un rapport d'exécution du rétablissement de configuration demandé.

Le procédé qui vient d'être décrit permet à un nœud contrôleur de synchroniser une renégociation par le ou les nœuds des connexions multi-liens qui seront impactés par l'exécution de l'action de contrôle CA. Pour ce faire, selon un ou plusieurs modes de réalisation, le dispositif 100 s'appuie sur des messages dont le format est spécifié par la norme EasyMesh.

Selon un ou plusieurs modes de réalisation, le message de notification de modification de configuration RQ1_RCFG peut être un unique message envoyé à destination de tous les nœuds impactés et auquel chacun des nœuds impactés va répondre par un message d'acquittement de modification de configuration RP1_RCFG.

Il s'agit par exemple d'une transaction de reconfiguration de type IEEE1905 comprenant un message de requête comprenant une information relative à une liste des connexions multi-liens à reconfigurer et un message de réponse envoyé suite à l'application par chacun des nœuds impactés de la configuration. Une telle transaction est décrite dans la spécification EasyMesh R6, section 7.4 du projet de 6^{ème} révision de la spécification EasyMesh Wi-Fi_EasyMesh_Specification_DRAFT_R6-240208b. Par exemple, cette transaction de reconfiguration EasyMesh est construite comme suit :
- Une requête de type « AP MLD Configuration Request message » (spécifiée dans la Spécification EasyMesh R6, Section 17.1.63), et
- Une Réponse de type « AP MLD Configuration Response message » (spécifiée dans la Spécification EasyMesh R6, Section 17.1.64).

La requête « AP MLD Configuration Request message » comprend un champ d'information de type TLV intitulé « Agent AP MLD Configuration TLV » (spécifié dans la Spécification EasyMesh R6, Section 17.2.96). De façon plus générale, un champ d'information de type TLV contient des informations de type "Type, Longueur, Valeur", selon lequel le "Type" désigne un type d'information ou de paramètre inclus dans le champ, la "Longueur" indique la longueur du champ, spécifiée en octets ou en bits et la "Valeur" contient les données réelles associées au type spécifié. Un avantage d'un champ d'information TLV est de permettre l'ajout de nouveaux types d'informations sans nécessiter de modifications majeures dans la norme ou le protocole sous-jacent.

Plus spécifiquement, le champ TLV « Agent AP MLD Configuration TLV » décrit des paramètres de configuration de la connexion, en particulier les liens autorisés pour transporter des flux de paquets de données. Ces paramètres seront détaillés ci-après.

Plus précisément et en relation avec la Fig. 4, le champ d'information TLV « Agent AP MLD Configuration » comprend les éléments suivants :
- une liste de connexions multi-liens ou Description Multi-Liens MLD (pour « Multi-Link Description », en anglais), dont le nombre est donné par le champ « Value » intitulé 'Number of MLD'.
- Pour chaque connexion multi-liens, l'élément MLD comprend les champs d'informations suivants :
   - un identifiant du réseau Wi-Fi SSID,
   - une adresse MAC dédiée à cette connexion multi-liens,
   - une liste de équipements d'accès dont le nombre est donné par le champ 'Num Affiliated APs'. Pour chaque équipement d'accès de cette liste, le champ d'information « Agent AP MLD Configuration » comprend une description selon la norme EasyMesh de cet équipement d'accès, comprenant une adresse MAC de l'équipement d'accès « AP MAC Address », un identifiant radio unique RUID (« Radio Unique Identifier »), un identifiant « link-ID » du lien dans la connexion multi-liens

Le dispositif 100 envoie ce message pour notifier les nœuds du réseau maillé identifié comme impacté par l'action de contrôle CA, de la nouvelle configuration à adopter. Ce message indique les connexions multi-liens concernées et leur composition.

Une fois la modification de configuration effectuée, chaque nœud impacté répond au nœud contrôleur à l'aide d'un message de réponse. Ce message a deux fonctions, une première d'acquittement de la modification de configuration et une deuxième de mise à jour des informations de configuration des connexions multi-liens à jour au niveau du nœud contrôleur.

Le message de réponse « AP MLD Configuration Response message » comprend le champ d'information TLV « Agent AP MLD Configuration TLV » détaillé ci-dessus, dans lequel pour chaque connexion multi-liens, le nœud concerné a complété les champs d'information AP MAC Address, RUID et Link_ID, et un autre champ d'information de type TLV appelé « EHT Operations TLV » (spécifié dans la spécification EasyMesh R6, Section 17.2.103), dont le contenu correspond à celui de la configuration Wi-Fi7 et sera détaillé ci-après en relation avec la Fig. 6.

En relation avec la Fig. 5, on décrit désormais un procédé de traitement d'une requête de modification d'une configuration d'une connexion multi-liens établie par un nœud d'un réseau sans fil, selon un ou plusieurs modes de réalisation. Dans ce qui suit, on suppose que le procédé en question est mis en œuvre par un dispositif 200 tel que décrit précédemment, en relation avec la Fig. 1. Un tel dispositif 200 est embarqué dans un nœud du réseau sans fil, par exemple un équipement d'accès du réseau maillé MN de la Fig. 1, faisant partie des nœuds identifiés comme susceptibles d'être impactés par l'action de contrôle programmée pour être exécutée par ledit au moins un nœud exécutant sur une bande de fréquences donnée. Ce nœud impacté peut donc être le nœud ou un des nœuds exécutants ou un autre nœud, selon l'action de contrôle programmée.

Dans la suite, on suppose que ce nœud impacté a établi au moins une connexion multi-liens avec au moins un autre nœud du réseau sans fil.

Au cours d'une étape 51, le dispositif 200 obtient un message de requête RQ1_RCFG de modification de configuration d'au moins une connexion multi-liens établie par ledit nœud impacté reçu par ledit nœud en provenance du nœud contrôleur CTR dudit réseau maillé sans fil. Ce message peut être reçu sur un ou plusieurs liens de la ou des connexions multi-liens.

Selon un ou plusieurs modes de réalisation, cette requête comprend une commande de suppression d'une autorisation de transmission et de réception de données sur le lien de ladite connexion utilisant la bande de fréquences concernée par l'action de contrôle lien pour ladite au moins une connexion, pour au moins un type de flux de données,

En 52, le dispositif 200 émet vers ledit autre nœud un message comprenant une première requête RQ1-CNX de renégociation de ladite connexion, comprenant des instructions de configuration mettant en œuvre la commande de suppression d'une autorisation de transmission et de réception de données sur ledit lien pour ladite au moins une connexion, pour ledit au moins un type de flux.

Selon un ou plusieurs modes de réalisation, ces instructions de configuration spécifient, pour ladite au moins une connexion, les liens autorisés pour la transmission et la réception de flux de données et elles ne comprennent donc pas ledit lien pour ledit au moins un flux de données.

Par exemple, les instructions de configuration sont spécifiées à l'aide d'un champ d'information intitulé association d'un identifiant de trafic à un lien ou «TID-To-Link Mapping » pour spécifier les liens à utiliser pour la connexion multi-liens. Par exemple, le champ TID-To-Link Mapping indique une séquence binaire ordonnée (en anglais « bit-map ») selon laquelle chaque bit correspond à un lien de la connexion multi-liens, le lien correspondant étant autorisé lorsque le bit vaut 1 et interdit lorsqu'il vaut 0.

Suite à la renégociation de ladite connexion, le dispositif 200 émet en 53, en provenance du nœud impacté, un message de réponse RP1-CNX comprenant un rapport d'exécution de la modification de configuration à destination du nœud contrôleur.

En 54, le dispositif 200 obtient un message de requête de rétablissement de la configuration reçu par le nœud impacté en provenance du nœud contrôleur, comprenant une commande d'ajout d'une autorisation de transmission et de réception de données sur ledit lien pour ladite au moins une connexion, pour ledit au moins un type de flux.

En 55, le dispositif 200 déclenche l'émission par le nœud impacté et à destination de l'autre nœud auquel il est connecté via ladite connexion, d'un message comprenant une deuxième requête RQ2_CNX de renégociation de ladite au moins une connexion, comprenant des instructions de configuration, mettant en œuvre la commande d'ajout d'une autorisation de transmission et de réception de données sur ledit lien pour ladite au moins une connexion, pour ledit au moins un type de flux.

Selon un ou plusieurs modes de réalisation, ces instructions de configuration spécifient pour ladite au moins une connexion les liens autorisés pour la transmission et la réception de flux de données et elles comprennent ledit lien pour ledit au moins un type de flux.

En 56, le dispositif 200 déclenche l'émission par le nœud impacté et à destination du nœud contrôleur, d'un message RP2_RCFG comprenant un rapport d'exécution du rétablissement de la configuration de ladite au moins une connexion.

Selon un ou plusieurs modes de réalisation, lorsque ledit nœud impacté a établi plusieurs connexions mettant en œuvre un lien utilisant la bande de fréquences données, les messages successifs RQ1_CNX de première requête de renégociation de connexion et le message RQ2_CNX de deuxième requête de renégociation de connexion sont émis à destination de ladite pluralité d'autres nœuds connectés à lui via ces connexions.

De la sorte, chacun des nœuds impactés renégocie une première fois les connexions multi-liens qu'il a établies avec d'autres nœuds pour adapter leurs configurations sur demande du nœud contrôleur, avant l'exécution de l'action de contrôle programmée sur la bande de fréquences données, puis une deuxième fois, une fois l'action de contrôle terminée, sur demande du contrôleur, pour rétablir les configurations initiales.

Selon un ou plusieurs modes de réalisation, les messages de requête de renégociation de connexion sont conformes à la norme Wi-Fi7, en particulier la section IEEE802.11be Draft 4.0 §35.3.7 Link management.

Selon cette section, lors de la négociation d'une connexion multi-liens avec un équipement station qui souhaite s'attacher à lui, un équipement d'accès peut définir une information relative à un ou des types de flux autorisés sur chacun des liens de cette connexion. Cette information est décrite dans une trame de gestion (en anglais, « beacon ») qu'il émet périodiquement dans son réseau local LAN pour annoncer ses capacités notamment en termes de QoS, et que les stations et les autres points d'accès écoutent. Les informations obtenues permettent à une station de déterminer quels réseaux Wi-Fi sont disponibles et décider à quel point d'accès ils vont se connecter. La trame de gestion comprend d'autres informations essentielles sur le réseau local, telles que le nom du réseau SSID (Service Set Identifier), les capacités de sécurité, les canaux pris en charge, les délais d'attente, etc. Pour un autre point d'accès, elles permettent de connaître les points d'accès voisins visibles à travers le medium radio et donc de se coordonner en utilisant le protocole EasyMesh.

Cette information relative aux types de flux autorisés sur un lien donné est aussi décrite dans une autre trame de gestion, appelée réponse de sondage envoyées par un équipement d'accès (AP) en réponse à une requête de sondage (de l'anglais, « probe request ») émise par une station souhaitant se connecter à l'équipement d'accès. La réponse de sondage comprend d'autres informations essentielles sur le réseau local de l'équipement d'accès, telles que son nom SSID, ses capacités de sécurité, etc, pour permettre à la station requérante de décider si elle souhaite s'associer à cet « équipement d'accès.

Cette information est aussi échangée lors de l'association d'une station à l'équipement d'accès. Elle peut enfin être envoyée par l'équipement d'accès aux stations qui lui sont connectée pour renégocier la connexion, en modifiant les types de flux autorisés sur le lien.

Dans tous les cas, un élément d'information appelé identifiant de Trafic à un Lien (de l'anglais, « TID-To-Link Mapping"), décrit l'association d'un identifiant de trafic (TID), qui identifie un flux de données spécifique ou un type de trafic, à un lien de la connexion multi-liens.

A cet égard, on désigne par identifiant de trafic (de l'anglais, « Traffic Identifier »), tout identifiant utilisable par des entités de couche supérieure pour distinguer les unités de données de service (MSDU) de contrôle d'accès au support (MAC) des entités MAC qui prennent en charge la qualité de service (QoS) au sein du service de données MAC.

Il y a 16 valeurs possibles pour l'identifiant de trafic, dont 8 qui identifient des catégories de trafic TC (pour « Traffic Categories », en anglais) distinguant les trafic voix (en anglais, « Voice »), vidéo (en anglais, « Video »), meilleur effort (en anglais, « Best Effort ») et fond (en anglais, « Background ») qui ont chacune des exigences de qualité de service (QoS) spécifiques en termes de délai, de gigue, de perte de paquets, etc.

Les 8 autres valeurs possibles identifient des types de flux de données paramétrés TS (pour « parameterized traffic streams », en anglais) c'est-à-dire des types de flux de données spécifiques dans un réseau Wi-Fi qui sont associés à des paramètres de transmission spécifiques. Ces flux de données sont caractérisés par des paramètres tels que le débit binaire, les délais de transmission, les besoins en bande passante, etc, qui sont utilisés pour fournir des garanties de qualité de service (QoS) pour des applications sensibles au délai telles que la voix sur IP (VoIP) ou la diffusion en continu de vidéos. Ils peuvent être associés à des mécanismes de gestion de QoS tels que le WMM (Wi-Fi Multimedia) dans le cadre de la norme IEEE 802.11e.

L'identifiant de trafic TID est affecté à une unité de données de service MSDU dans les couches du modèle OSI qui sont supérieures à la couche MAC. Ceci permet d'assurer une correspondance entre la couche IP (champ TOS/DSCP) et la couche MAC Wi-Fi (TID) afin de gérer la transmission. Une fois le paquet catégorisé, l'information est intégrée dans l'en-tête Wi-Fi. Cela permet au protocole Wi-Fi de traiter une catégorie de flux de manière indépendante une fois que ce flux est identifié et marqué avec le TID associé au type de trafic.

Plus précisément, selon l'amendement IEEE802.11be 9.4.2.314 TID, l'identifiant de Trafic à un Lien (TID-To-Link Mapping) prend la forme d'un élément d'information de type TLV, dont le champ d'information « Valeur » indique, pour chaque lien de la connexion multi-liens, les types de trafic pouvant passer par ce lien. Si aucun type de trafic n'est défini pour un lien, il est considéré que ce lien n'est plus utilisable. Par défaut, tous les types de trafic sont autorisés sur tous les liens.

Selon un ou plusieurs modes de réalisation, cet élément d'information TID-To-Link Mapping est exploité dans les messages de requêtes de renégociation de connexion RQ1_CNX et RQ2_CNX adressés par les nœuds du réseau maillés impactés par l'action de contrôle CA programmée, pour répondre aux requêtes de modification de configuration de leurs connexions reçues du nœud contrôleur.

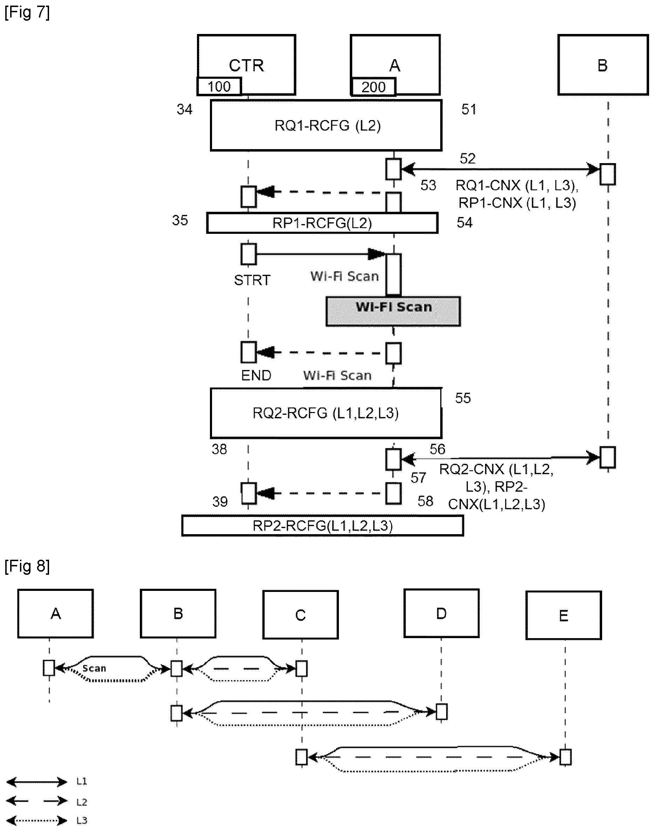

En relation avec les Figures 6 et 7, on détaille maintenant un exemple de mise en œuvre du mécanisme de renégociation d'une connexion multi-liens, selon un ou plusieurs modes de réalisation. On considère en particulier le cas d'une interruption totale des transmissions et réception sur le lien utilisant la bande de fréquences concernée par l'action de contrôle programmée.

Par exemple, le dispositif 200 est configuré pour transmettre ce champ TID-To-Link Mapping dans une trame d'action (de l'anglais, « Action Frame »), telle que définie par exemple dans l'amendement IEEE 802.11be Draft 4.0, une "Action Frame" (trame d'action). Selon un mode de réalisation, il s'agit d'un type particulier de trame de contrôle utilisée par un nœud d'un réseau sans fil Wi-Fi pour déclencher une action spécifique de la part d'un autre nœud.

Par exemple, en relation avec la Fig. 6, la trame d'action utilisée est une recommandation concernant des paramètres de liaison pour les communications dans un réseau Wi-Fi fonctionnant en mode « Haut Débit Etendu » EHT (de l'anglais, « Extended High Throughput »). Le message de renégociation de la connexion RQ1_CNX prend alors la forme suivante :

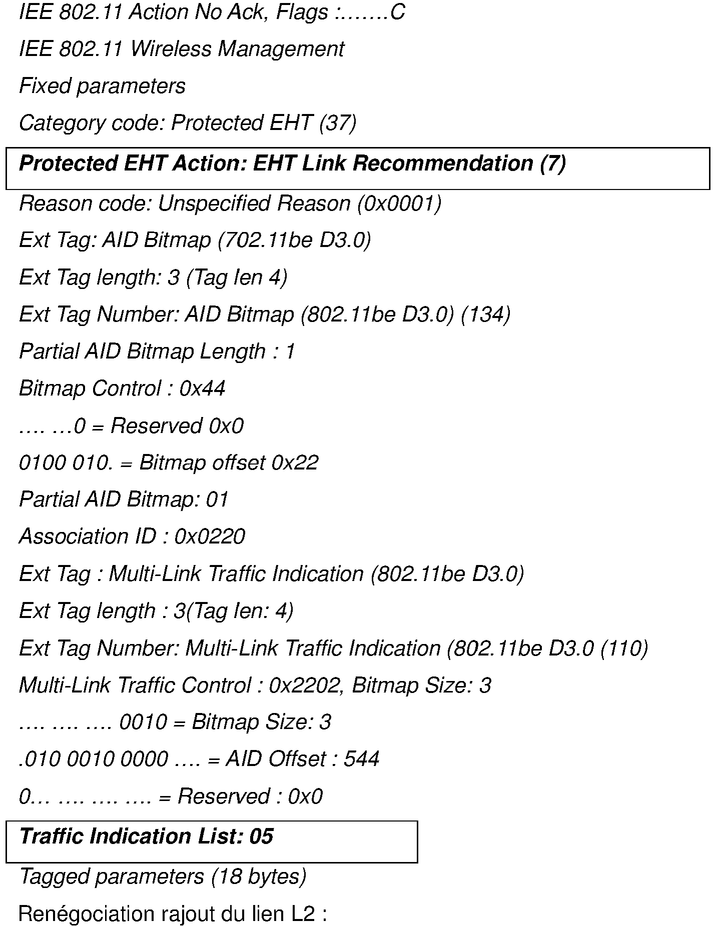

La ligne « Protected EHT Action : EHT Link Recommendation (7) » indique que le message est de type « recommandation des liens ».

La ligne « Traffic Indication List : 07 » décrit la composition des liens à l'aide d'un masque de bits des liens autorisés. En binaire, 0x5 vaut 101, ce qui correspond à L1=1, L2=0, L3=1. Le lien L2 n'est donc pas autorisé pour la connexion.

Une fois l'action de contrôle terminée, chaque nœud impacté transmet, sur réception d'une requête de rétablissement de la configuration RQ2_RCFG en provenance du nœud contrôleur, une deuxième requête RQ2_CNX de renégociation avec le ou les autres nœuds avec lesquels il a établi une connexion multi-liens pour autoriser de nouveau le lien temporairement interdit.

Selon l'exemple de la Fig. 6, les instructions de rétablissement de la configuration sont transmises dans une trame d'action de type recommandation de lien en mode Haut débit étendu EHT et le paramètre « Traffic Indication List » est cette fois positionné à 0x7. En binaire, cette valeur correspond à la séquence binaire 111, ce qui indique L1=1, L2=1, L3=1. Une fois cette modification de configuration mise en place, tous les liens de la connexion multi-liens entre les nœuds A et B sont de nouveau autorisés.

En relation avec la Fig. 7, on décrit maintenant un exemple de mise en œuvre des procédés qui viennent d'être présentés dans le cas où l'action de contrôle programmée est une procédure Wi-Fi Scan d'analyse ou de balayage d'une bande de fréquences données parmi les bandes de fréquences disponibles. En référence à la Fig. 1, on suppose que le nœud contrôleur CTR a programmé l'exécution de cette action de contrôle Wi-Fi Scan sur l'une des bandes de fréquences à 5GHz, par exemple la bande basse 5150 MHz - 5350 MHz. Dans l'exemple de la Fig. 1, le nœud contrôleur CTR et le nœud A sont un seul et même équipement d'accès. Néanmoins, la description qui va suivre s'applique tout aussi bien lorsque les deux nœuds sont des équipements d'accès distincts.

L'impact d'une action de contrôle Wi-Fi Scan sur la connexion multi-liens CAB établie par le nœud exécutant A se définit comme une coupure de transmission et de réception sur le lien utilisant la bande de fréquences donnée pendant toute la durée du balayage qui est environ de 20 secondes.

Seul le nœud exécutant sera empêché d'émettre et de recevoir sur ce lien. Il est donc le seul nœud du réseau maillé impacté par l'exécution de cette action de contrôle.

Dans cet exemple, considérant le nœud A, l'action de contrôle Wi-Fi Scan aura un impact sur le lien L2{A,B} de la connexion CAB qui utilise la bande de fréquences 5GHz.

Pour cette action de contrôle Wi-Fi Scan, la solution proposée est donc de renégocier la connexion multi-liens pour retirer le lien L2 de la connexion CAB.

En relation avec la Fig. 7, le dispositif 100 du nœud contrôleur CTR obtient en 30 l'information ICA relative à la programmation d'une action de contrôle ICA de type Wi-Fi Scan sur le nœud A du réseau sans fil MN qu'il contrôle. Il notifie le nœud A en lui envoyant en 34 une requête RQ1_RCFG de modification de configuration de sa connexion CAB. Elle indique que l'autorisation de transmettre et recevoir sur le lien L2 doit être supprimée. Le dispositif 200 du nœud A reçoit cette requête et déclenche une renégociation de sa connexion CAB avec le nœud B en lui envoyant en 52 une requête de renégociation de connexion RQ1_CNX dans laquelle la transmission et réception de données sur le lien L2 ne sont pas (plus) autorisées quel que soit le type de trafic de données.

Par exemple, le nœud B choisit, selon une logique de décision propriétaire, d'utiliser le lien L3 autorisé à la place du lien L2 supprimé.

A réception d'un message de réponse RP1_CNX de la part du nœud B, le dispositif 200 du nœud A confirme en 53 au nœud contrôleur CTR que la connexion a bien été renégociée (RP1_RCFG). A réception le dispositif 100 du contrôleur notifie (STRT WI-FI SCAN) en 36 le nœud contrôleur qu'il peut déclencher l'action de contrôle Wi-Fi Scan.

En référence à la Fig. 8, suite à cette première renégociation de la connexion multi-liens CAB, l'impact sur les flux de paquets de données définis précédemment est le suivant :
- Entre A et C :

   A←→C (f1) : L1{A, B} + L{B, C}

   A←→C (f2) : L3{A, B} + L2{B, C}

   A←→C (f3) : L3{A, B} + L3{B, C}
- Entre A et D :

   A←→D (f1) : L1{A, B} + L1{B, D}

   A←→D (f2) : L3{A, B} + L2{B, D}

   A←→D (f3) : L3{A, B} + L3{B, D}
- Entre A et E :

   A←→E (f1) : L1{A, B} + L1{B, C} + L1{C, E}

   A←→E (f2) : L3{A,B} + L2{B,C} + L2{C, E}

   A←→E (f3) : L3{A, B} + L3{B, C} + L3{C, E}

Le nœud contrôleur CTR déclenche l'action Wi-Fi Scan en envoyant une commande RQ_CA au nœud A qui effectue le Wi-Fi Scan pendant 20 secondes puis transmet un rapport d'exécution RP_CA du Wi-Fi Scan au nœud contrôleur. Dès qu'il en est informé (END Wi-Fi SCAN), le dispositif 100 du nœud contrôleur CTR notifie le nœud A en lui envoyant en 38 une requête RQ2_RCFG de rétablissement de configuration de sa connexion CAB. Elle indique que l'autorisation de transmettre et recevoir sur le lien L2, précédemment supprimée, doit être ajoutée. Le dispositif 200 du nœud A reçoit cette requête en 54 et déclenche une renégociation de sa connexion CAB avec le nœud B en lui envoyant en 55 une requête de renégociation de connexion RQ2_CNX dans laquelle la transmission et réception de données sur le lien L2 est de nouveau autorisée quel que soit le type de trafic de données. Sur réception en 56 d'une confirmation de la part du nœud B, le dispositif 200 du nœud A confirme en 57au nœud contrôleur le rétablissement de la configuration initiale pour la connexion CAB.

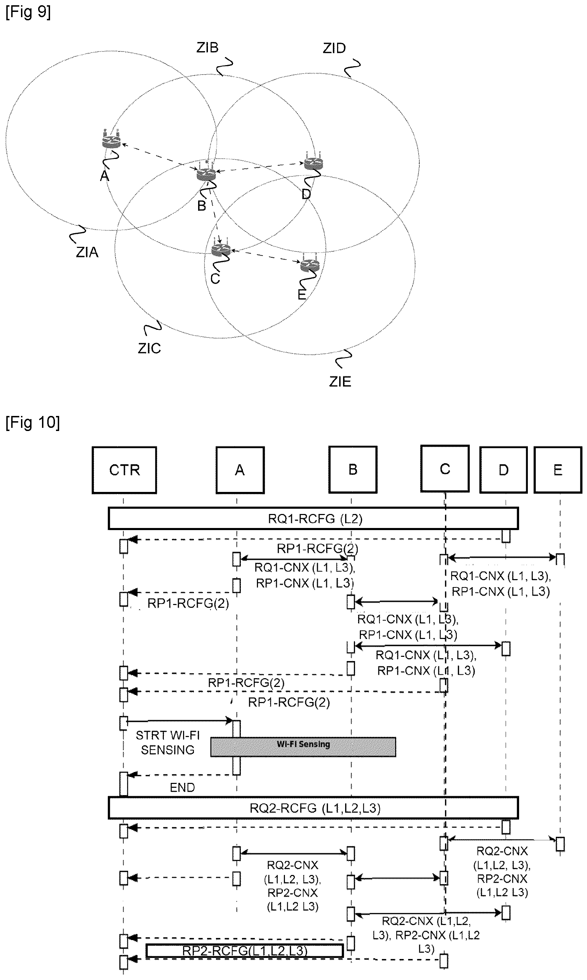

En relation avec les Figures 9-11, on décrit maintenant un exemple de mise en œuvre des procédés qui viennent d'être décrits dans le cas où l'action de contrôle programmée est une procédure Wi-Fi Sensing de détection à la réception de paquets de données sur une bande de fréquences donnée parmi les bandes de fréquences disponibles. En référence à la Fig. 1, on suppose que le nœud contrôleur CTR a programmé l'exécution de cette action de contrôle Wi-Fi Sensing sur la bande de fréquences 5GHz entre les nœuds A et B qu'on considère dans la suite comme tous les deux exécutants, même si dans c'est A qui est désigné pour initier la procédure de Wi-Fi Sensing et B ne fait que réagir. Dans l'exemple de la Fig. 1, le nœud contrôleur CTR et le nœud A sont un seul et même équipement d'accès. Néanmoins, la description qui va suivre s'applique tout aussi bien lorsque les trois nœuds CTR, A et B sont des équipements d'accès distincts.

L'action repose sur un échange de paquets à courts intervalles entre le nœud A et le nœud B qu. La durée de perturbation est estimée à 10 secondes. L'impact d'une action de contrôle Wi-Fi Sensing peut être défini comme étant une réduction significative de la transmission et de la réception sur les liens L2 utilisant la bande de fréquences 5GHz des toutes les connexions établies par les deux nœuds A et B pendant la durée de l'échange de paquets de données.

L'étude d'impact pour cette action de Wi-Fi Sensing est donc potentiellement plus complexe que celle de l'action de Wi-Fi Scan. Plus précisément, comme les nœuds A et B vont chacun émettre et recevoir des paquets de données sur la bande de fréquences 5GHz pour exécuter l'action de Wi-Fi Sensing, on peut définir comme zone d'impact l'ensemble des nœuds du réseau maillé qui utilisent cette bande de fréquences 5GHz et qui sont suffisamment proches des nœuds A et B pour être affectés par cet échange de paquets, c'est-à-dire pour détecter les signaux radio qui en résultent. Par exemple, la proximité d'un nœud à un autre nœud peut être déduite d'une information de niveau de signal radio reçu RSSI (de l'anglais, « Received Signal Strength Indication »), fournie par le nœud en question à l'autre nœud, et la comparaison à un seuil donné TH, par exemple fixé à -75dBm, comme précédemment décrit en relation avec la Fig. 4. En l'espèce, les nœuds du réseau maillé MB qui ont indiqué une information de niveau de signal reçu RSSi supérieure au seuil donné TH sont considérés comme impactés par l'action de contrôle Wi-Fi Sensing programmé.

Selon un ou plusieurs modes de réalisation, cette étude d'impact est mise en œuvre par le dispositif 100 du nœud contrôleur CTR.

Ce dernier peut récupérer et regrouper l'information concernant le niveau de signal reçu RSSI par chaque nœud de chaque autre nœud du réseau maillé MN, par exemple en déclenchant au niveau de chaque nœud de la pluralité de nœuds du réseau maillé, la mise en œuvre d'une procédure de rapport de voisinage telle que spécifiée dans la norme IEEE 802.11k.

A titre d'exemple illustratif et non limitatif, on peut considérer fixer un seuil TH de niveau de signal radio minimal à -75dBm. Ainsi, pour un nœud donné, tous ses voisins « visibles » à plus de TH= -75dBm, c'est-à-dire dont le nœud reçoit les signaux radio avec un niveau signal radio supérieur au seuil TH, sont considérés comme l'impactant. Dans d'autres exemples, le seuil donné TH est choisi dans une plage de valeurs, par exemple, comprise entre -70dBm et -80dBm. Cette valeur peut être configurée en fonction de la topologie du réseau sans fil MN (par exemple son nombre de nœuds), son environnement (à l'intérieur, à l'extérieur, en présence de réseaux sans fil voisins), ou la sensibilité en réception des nœuds constitutifs dudit réseau sans fil MN.

Ainsi, il est possible de déterminer à partir des rapports de voisinage et du seuil TH, pour chaque nœud du réseau maillé, s'il est à portée d'un nœud exécutant ; puis d'établir une liste de nœuds qui seront impactés par les transmissions du nœud exécutant, et d'en déduire une liste L_IMP des nœuds impactés par l'action de Wi-Fi Sensing en faisant l'union des listes des nœuds impactés par la transmission de chaque nœud exécutant, ici A et B. Comme précédemment décrit, cette liste des nœuds impactés L_IMP est ensuite utilisée par le dispositif 100 pour modifier les configurations de toutes les connexions impactées par l'action de contrôle Wi-Fi Sensing programmée.

En relation avec la Fig. 9, on présente une zone d'impact mesurées ZIA-ZID pour chaque nœud du réseau maillé MN. Ceci est mesurable pour chaque nœud, à partir des informations de niveau de signal radio reçu RSSI, qui permettent de déterminer si le nœud en question est à portée ou non de la transmission d'un autre nœud.

Dans l'exemple considéré, il est ainsi possible de déduire que :
- une transmission du nœud A : impacte le nœud B,
- une transmission du nœud B : impacte les nœuds A, C et D,
- une transmission du nœud C : impacte les nœuds B et E,
- une transmission du nœud D : impacte le nœud B,
- une transmission du nœud E : impacte le nœud C.

Une transmission de mesure bi-directionnelle par la procédure de Wi-Fi Sensing entre les nœuds A et B impactera donc l'union de leurs listes respectives, c'est-à-dire L_IMP = {B, A, C et D}.

Cela implique que tous les liens L2 établis entre des nœuds du réseau maillé MN et comprenant l'un de ces quatre nœuds seront impactés par la procédure de Wi-Fi Sensing.

Par conséquent, selon un ou plusieurs modes de réalisation, le dispositif 100 est configuré pour demander à chacun des nœuds de la liste L-IMP de modifier sa configuration en vue de l'exécution de l'action de contrôle Wi-Fi Sensing programmée au niveau des nœuds A et B.

En relation avec la Fig. 10, on décrit désormais les flux de messages entre le nœud contrôleur CTR et les nœuds du réseau sans fil MN qui sont impactés par une action de contrôle du réseau, de type Wi-Fi Sensing , programmée, selon un ou plusieurs modes de réalisation. On suppose ici que le dispositif 100 a déjà réalisé l'étude d'impact et qu'il dispose de la liste L_IMP des nœuds impactés, par exemple stockée dans une mémoire du dispositif 100 ou du nœud contrôleur CTR.

Le dispositif 100 est configuré pour émettre (étape 34) une première requête de modification de configuration RQ1-RCFG à destination des nœuds de la liste L_IMP, en l'espèce A, B, C et D pour leur demander de supprimer le lien L2 (qui utilise la bande de fréquences 5GHz) de leurs connexions établies avec d'autres nœuds du réseau maillé MN. Par exemple, il émet un seul message qui est destiné à tous les nœuds concernés. En alternative, il émet un message à destination de chacun des nœuds concernés.

A réception, le dispositif 200 du nœud A renégocie les liens à utiliser avec le nœud B afin de ne plus utiliser le lien L2{A,B} et d'utiliser les liens L1{A,B} et L3{A,B} à la place. Pour ce faire, il applique une logique propriétaire qui peut notamment prendre en compte les capacités des autres liens disponibles et des contraintes d'équilibre de charge sur ces différents liens. En pratique, chaque radio utilise une bande de fréquences différente des autres radios, et la bande de fréquences de 2.4GHz (L1) a une capacité significativement plus faible que la bande de fréquences 5GHz (L2) et plus encore que la bande de fréquences 6GHz (L3). En l'espèce, le dispositif 200 du nœud A décide de remplacer L2 par L3 qui a la bande passante la plus élevée.

Selon un ou plusieurs modes de réalisation, le dispositif 200 du nœud A émet (étape 52) à destination du nœud APB une requête de renégociation de connexion RQ1_CNX dans lequel il indique que les liens à utiliser sont L1{A,B} et L3{A,B}. Autrement dit, il a supprimé le lien L2 {A,B} de la liste des liens autorisés.

De même, le dispositif 200 du nœud B renégocie les liens à utiliser avec le nœud C afin de ne plus utiliser le lien L2{B,C}et d'utiliser les liens L1{B,C} et L3{B,C} à la place. Pour ce faire, selon un ou plusieurs modes de réalisation, le dispositif 200 du nœud B émet (étape 52) à destination du nœud C une requête de renégociation de connexion RQ1_CNX dans lequel il indique que les liens à utiliser sont L1{B,C} et L3{B,C}. En réponse, il reçoit un message d'acquittement RP1_CNX (non représenté) du nœud APC (étape 53).

Le dispositif 200 du nœud B renégocie aussi, de façon similaire, les liens à utiliser avec le nœud D afin de ne plus utiliser le lien L2{B,D} et d'utiliser les liens L1{B,D} et L3{B,D} à la place. En réponse, il reçoit un message d'acquittement RP1_CNX (non représenté) du nœud D (étape 53).

De même, le dispositif 200 du nœud C renégocie, de façon similaire les liens à utiliser avec le nœud E afin de ne plus utiliser le lien L2{C,E} et d'utiliser les liens L1{C,E} et L3{C,E} à la place. En réponse, il reçoit un message d'acquittement RP1_CNX (non représenté) du nœud APE (étape 53).

Quant au dispositif 200 du nœud D, il ne renégocie aucune connexion, car son lien avec le nœud B a déjà été traité par le nœud B.

Ensuite, chacun des nœuds A, B, C et D acquitte (étape 54) la modification de configuration effectuée en réponse à la requête RQ1-RCFG'interruption de leur lien L2 respectif, par exemple en émettant un message d'acquittement RP1_RCFG au nœud contrôleur CTR.

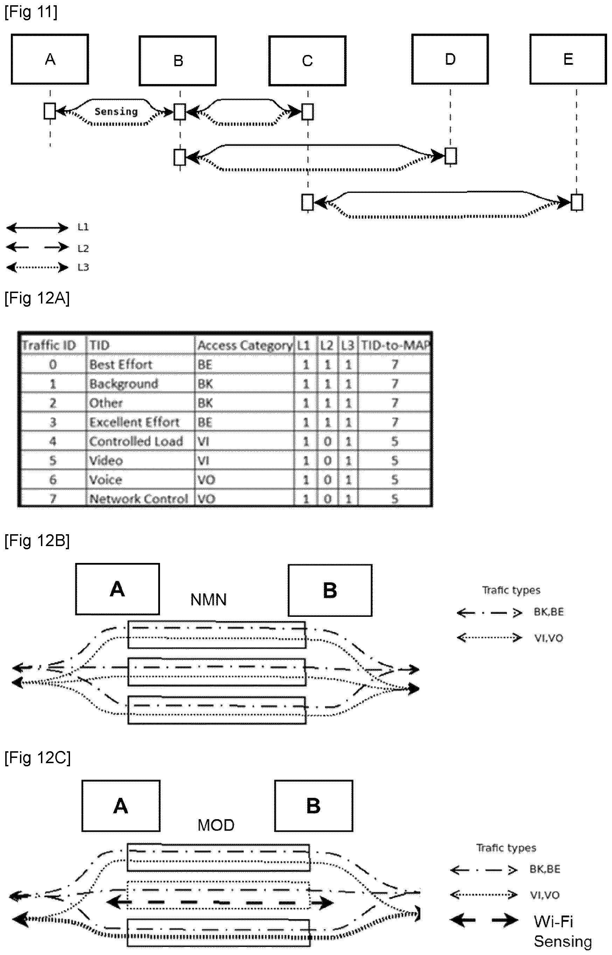

A ce stade, les connexions renégociées sont configurées comme illustré par la Fig. 11 :
- Entre A et C :

   A←→C(f1) : L1{A,B}+ L2{B,C}

   A←→C(f2) : L3{A, B} + L3{B, C}

   A←→C (f3) : L3{A,B} + L3{B, C}
- Entre A et D :

   A←→D (f1) : L1{A, B} + L1{B, D}

   A←→D (f2) : L1{A, B} + L1{B,D}

   A←→AD (f3) : L3{A, B} + L3{B, D}
- Entre A et E :

   A←→E (f1) : L1{A,B} + L1{B,C} + L1{C,E}

   A←→E (f2) : L3{A,B} + L3{B,C} + L3{C,E}

Une fois qu'il a reçu (étape 35) la confirmation de la part de chaque nœud de la liste L_IMP que la requête de modification de configuration RQ1_RCFG a bien été prise en compte, le nœud contrôleur déclenche l'exécution de l'action de contrôle programmée Wi-Fi Sensing en envoyant une requête RQ1_CA d'exécution au nœud A.

Le Wi-Fi Sensing se déroule entre les nœuds A et B pendant 10 secondes suite à la requête du contrôleur.

Une fois le Wi-Fi Sensing effectué, le nœud A retourne un message d'acquittement RP_CA comprenant un rapport d'exécution de l'action de contrôle Wi-Fi Sensing au nœud contrôleur CTR.

A réception d'une notification de fin d'exécution (étape 37), le dispositif 200 du nœud contrôleur émet (étape 38) à destination des nœuds impactés une deuxième requête RQ2_RCFG de modification de configuration pour leur demander de rétablir le lien L2 dans leurs connexions respectives. Pour ce faire, il indique par exemple que le lien L2 est autorisé. Par exemple, il émet un seul message qui est destiné à tous les nœuds concernés. En alternative, il émet un message à destination de chacun des nœuds concernés.

A réception, le nœud A renégocie les liens à utiliser avec le nœud B afin d'utiliser le lien L2{A,B} à nouveau. Pour ce faire, selon un ou plusieurs modes de réalisation, le dispositif 200 du nœud A émet (étape 56) à destination du nœud B un message de renégociation de connexion RQ2_CNX dans lequel il indique que les liens à utiliser sont L1{A,B}, L2{A,B} et L3{A,C}. En réponse, il reçoit un message d'acquittement RP2_CNX (non représenté) du nœud B (étape 57).

De même, le nœud B renégocie les liens à utiliser avec C afin d'utiliser le lien L2{B,C} à nouveau.

Le nœud B renégocie aussi les liens à utiliser avec D afin d'utiliser le lien L2{B,D} à nouveau.

Le nœud C renégocie les liens à utiliser avec E afin d'utiliser le lien L2{C,E} à nouveau.

Le nœud D n'a aucun lien à renégocier.

Ensuite, une fois leurs connexions rétablies, les nœuds A, B, C et D acquittent la remise en marche du lien L2 au contrôleur (étape 58), par exemple en envoyant un message RP2_RCFG.

En relation avec les Figs 12A-12C, on décrit maintenant un exemple de procédé de modification d'une configuration des connexions établies par les nœuds d'un réseau sans fil selon un autre mode de réalisation. Dans cet exemple, la solution reposant sur la renégociation de l'utilisation du multi-liens permet d'indiquer quels types de trafic, autrement dit de flux de données spécifique est autorisé à emprunter chacun des liens de la connexion.

Par exemple, les types de trafic considérés comprennent le type arrière-plan BK (de l'anglais, « background »), le type meilleur effort BE (de l'anglais, « best effort », le type vidéo VI (de l'anglais, « video » et le type voix VO (de l'anglais, « voice »). Ces différents types de trafic sont chacun associés à des exigences spécifiques en termes de conditions de transmission. Par exemple, les flux de données de type VI ou VO sont associés à des conditions de transmission en temps réel (en anglais, « live ») et donc à des contraintes élevées de latence et de perte de paquets.

Selon la norme Wi-Fi et comme indiqué dans le tableau de la Fig. 12A, ces différents types de flux sont associés à des identifiants de trafic (de l'anglais, « traffic ID ») distincts. Par exemple, le type BE est associé à la valeur d'identifiant 0, le type BK à la valeur 1, le type BE à la valeur 3, le type VI à la valeur 5 et le type VO à la valeur 6.

Dans la suite, on note de la façon suivante un lien de la connexion établie entre A et B sur la bande de fréquences 2,4GHz autorisant tous les types de trafic BK, BE, VI et VO : L1{A,B}[BK, BE, VI, VO]. Si on retire le flux de données de type VI pour ce lien, la notation devient comme suit : L1{A,B}(1)[BK, BE, VO].

En relation avec la Fig. 12B, on suppose, dans un état nominal NMN, que toutes les bandes de fréquences sont utilisables (ici 2,4GHZ, 5GHz et 6GHz) et que tous les liens d'une connexion multi-liens peuvent accueillir tous les types de trafic. Autrement dit, les connexions multi-liens établies par les nœuds de la Fig. 1 sont dans cet état nominal.

On suppose par exemple que l'action de contrôle CA programmée sur le nœud PA de la Fig. 1 est une procédure de Wi-Fi Sensing sur la bande de fréquences utilisée par le lien L2 et que les nœuds impactés sont ceux définis en lien avec la Fig. 9, à savoir A, B, C et D. Cependant, pendant l'exécution de la procédure de Wi-Fi Sensing, l'échange de paquets de paquets de données entre A et B sous la forme de transmission continue sur la bande de fréquences donnée, par exemple 5GHz, peut perturber les flux de type VI et VO, mais les flux de type BK et BE ne sont pas nécessairement fortement impactés. Dans ce cas, il s'agit de renégocier l'utilisation des liens pour effectuer un retrait partiel du lien L2 impacté excluant les flux VI et VO.

Plus généralement, on note que ce mode de réalisation qui est maintenant décrit pourrait s'appliquer à toute autre action de contrôle qui a pour effet de perturber l'utilisation de la bande de fréquences données, mais n'impose pas forcément l'interruption totale des transmissions et réceptions de paquets de données sur les liens utilisant la bande de fréquences donnée, autrement dit lorsque le type de modification de configuration T_MOD associé à l'action de contrôle programmée comprend une réduction de la connexion sur le lien impacté.

Selon ce mode de réalisation, la requête de modification de configuration de la ou les connexions émises à destination des nœuds impactés du réseau sans fil MN (L_IMP) comprend une notification de suppression d'une autorisation de transmission et de réception de données sur ledit lien impacté pour au moins un type de flux de données, mais pas pour tous les types de trafic de données. Par exemple, elle spécifie explicitement que les types de trafic de données VI et VO ne sont pas autorisés à transiter via le lien L2. Par exemple, elle peut aussi spécifier que les types de trafic de données VI et VO doivent être acheminés via un autre lien de la connexion, par exemple le lien L3, dont la bande de fréquences ne fait pas l'objet d'une action de contrôle programmée.

De la sorte, on distingue les types de trafic les flux plus fortement impactés (VI,VO) qui sont exclus temporairement du lien L2 pour être redirigés temporairement sur le lien L3.

Ainsi, pour une connexion multi-liens données établie par un des nœuds de la liste L_IMP, les chemins des flux de données sont configurés selon leur type de trafic, comme suit :
- BK, BE : Même état que l'état nominal, c'est-à-dire autorisés sur tous les liens de la connexion multi-liens,
- VI,VO : interdits sur le lien L2 et redirigés sur l'un des autres liens.

Selon la norme Wi-Fi, l'information d'autorisation d'utilisation d'un type de trafic sur un lien donné d'une connexion multi-liens peut être transmise par le nœud ayant établi une connexion multi-liens avec un autre nœud, à cet autre nœud, à travers un élément d'information d'un message de trame de gestion ou balise Wi-Fi (en anglais, « beacon ») envoyé périodiquement par le nœud dans son réseau local LAN pour annoncer ses capacités notamment en termes de QoS, mais aussi une configuration à adopter pour les stations qui souhaitent se connecter à lui. Pour chaque type de trafic, cet élément d'information les liens de la connexion autorisés.

Par exemple, un tel élément d'information indiquant le retrait des trafics de type VI et VO sur le lien L2 prend la forme suivante :

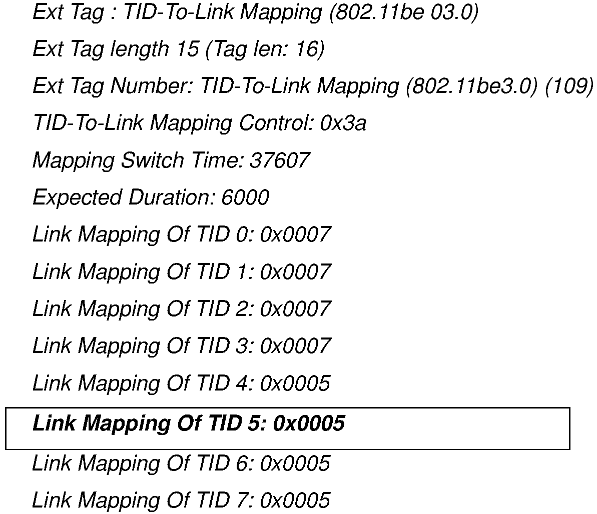

En relation avec le tableau de la Fig. 12A, on comprend que la ligne « Link Mapping Of TID 5: 0x0005 » revient à autoriser les flux de type VI sur les liens L1 et L3 et à les interdire sur le lien L2.

La solution proposée ici consiste à utiliser pour spécifier la requête de modification de configuration émise par le nœud contrôleur à destination du ou des nœuds impactés par l'action de contrôle, un autre champ d'information de type TLV que celui précédemment décrit (TLV AP MLD Configuration Request et Response), par exemple un champ d'information intitulé « TID-to-Link Mapping Policy TLV » tel que décrit dans la norme EasyMesh R6, Section 17.2.102.

Cet autre champ d'information TID-To-Link Mapping Policy TLV présente une structure similaire au précédent, sauf qu'il n'indique pas de liste des points d'accès. A la place, il inclut les informations de TID-To-Link Mapping qui viennent d'être décrites pour une trame de gestion Wi-Fi.

Ensuite, le dispositif 200 d'un nœud impacté est configuré pour déclencher une renégociation des connexions multi-liens qu'il a établies avec d'autres nœuds, qui peuvent être des points d'accès ou des stations, en leur envoyant une requête de renégociation de connexion, qui peut par exemple prendre la forme d'un message de contrôle générique de type trame d'action (en anglais, « action frame »), comprenant un élément TLV TID-to-Link Mapping tel que décrit précédemment. En effet, il convient de noter que la forme du TLV est la même pour une requête de modification entre le nœud contrôleur et l'agent d'un nœud impacté, par exemple conforme au protocole EasyMesh et pour une requête de renégociation de connexion multi-liens, conforme à la norme Wi-Fi entre un nœud impacté et les stations ou les autres points d'accès qui lui sont connectés.

En relation avec la Fig. 12C, on présente l'état MOD de la connexion multi-liens entre les nœuds A et B après le changement de configuration qui vient d'être décrit. Les flux de données VI et VO n'empruntent plus le lien L2, mais sont redirigées sur le lien L3.

Cet autre mode de réalisation est avantageux dans la mesure où il permet de spécifier des configurations différentes selon les types de trafic de données.

En relation avec la Fig. 13, on décrit maintenant un exemple de structure matérielle des dispositifs 100 de contrôle d'une configuration d'un réseau maillé selon l'invention et 200 de modification d'une configuration d'une connexion multi-liens entre des équipements d'accès d'un réseau maillé selon un ou plusieurs modes de réalisation de l'invention.

Sur la Fig. 13, le dispositif 100, 200, comprend au moins un processeur 110, 210 et au moins une mémoire 120, 220. Le dispositif 100, 200 peut aussi comprendre une ou plusieurs interfaces de communication. Dans cet exemple, le dispositif 100, 200 comprend des interfaces réseau 130, 230 (par exemple, des interfaces réseau pour l'accès à un réseau câblé / sans fil, y compris une interface Ethernet, une interface WIFI, etc.) connectées au processeur 110, 210 et configurées pour communiquer via un ou plusieurs liens de communication câblés / non câblés et des interfaces utilisateur 140, 240 (par exemple, un clavier, une souris, un écran d'affichage, etc) connectées au processeur. Le dispositif 100 peut également comprendre un ou plusieurs lecteurs de support 150 pour lire un support de stockage lisible par ordinateur (par exemple, un disque de stockage numérique (CD-ROM, DVD, Blue Ray, etc.), une clé USB, etc). Le processeur 110, 210 est connecté à chacun des autres composants précités afin d'en commander le fonctionnement.

La mémoire 120, 220 peut comprendre une mémoire vive (RAM), une mémoire cache, une mémoire non volatile, une mémoire de sauvegarde (par exemple, des mémoires programmables ou flash), une mémoire morte (ROM), un disque dur (HDD), un lecteur à état solide (SSD) ou toute combinaison de ceux-ci. La ROM de la mémoire 120, 220 peut être configurée pour stocker, entre autres, un système d'exploitation du dispositif 100, 200 et/ou un ou plusieurs codes de programmes informatiques d'une ou plusieurs applications logicielles. La RAM de la mémoire 120 peut être utilisée par le processeur 110, 210 pour le stockage temporaire de données.

Le processeur 110, 210 peut être configuré pour stocker, lire, charger, exécuter et/ou traiter autrement des instructions stockées dans un support de stockage lisible par ordinateur et/ou dans la mémoire 120, 220 de sorte que, lorsque les instructions sont exécutées par le processeur, le dispositif 100, 200 exécute une ou plusieurs ou toutes les étapes du procédé de contrôle, respectivement de modification d'une configuration, décrit dans le présent document. Des moyens mettant en œuvre une fonction ou un ensemble de fonctions peuvent correspondre dans ce document à un composant logiciel, à un composant matériel ou bien à une combinaison de composants matériels et/ou logiciels, apte à mettre en œuvre la fonction ou l'ensemble de fonctions, selon ce qui est décrit ci-dessous pour les moyens concernés.

La présente description concerne aussi un support d'informations lisible par un processeur de données, et comportant des instructions d'un programme tel que mentionné ci-dessus. Le support d'informations peut être n'importe quel moyen matériel, entité ou appareil, capable de stocker les instructions d'un programme tel que mentionné ci-dessus. Les supports de stockage de programme utilisables incluent les mémoires ROM ou RAM, les supports de stockage magnétiques tels que des disques magnétiques et des bandes magnétiques, les disques durs ou des supports de stockage de données numériques à lecture optique, ou toute combinaison de ces supports.

Dans certains cas, le support de stockage lisible par ordinateur n'est pas transitoire. Dans d'autres cas, le support d'informations peut être un support transitoire (par exemple, une onde porteuse) pour la transmission d'un signal (signal électromagnétique, électrique, radio ou optique) porteur des instructions de programme. Ce signal peut être acheminé via un moyen de transmission approprié, filaire ou non filaire : câble électrique ou optique, liaison radio ou infrarouge, ou par d'autres moyens.

Un mode de réalisation concerne également un produit programme d'ordinateur comprenant un support de stockage lisible par ordinateur sur lequel sont stockées des instructions de programme, les instructions de programme étant configurées pour causer la mise en œuvre par le dispositif hôte (par exemple un ordinateur, ou le dispositif 100 du nœud contrôleur, ou le dispositif 200 d'un nœud impacté) de tout ou partie des étapes d'un ou des procédés décrits ici lorsque les instructions de programme sont exécutées par un ou plusieurs processeurs et/ou un ou plusieurs composants matériels programmables d'un dispositif hôte, tel que par exemple un nœud contrôleur , respectivement un équipement d'accès nœud d'un réseau maillé.

Les modes de réalisations qui viennent d'être présentés ne sont pas limités à l'exemple particulier de réseau maillé qui vient d'être présenté et ils s'appliquent à d'autres types de réseaux de communication sans fil dont les nœuds sont chacun des équipements d'accès à un réseau sans fil, tels que, par exemple :
- un réseau de communication sans fil structuré selon un autre type de maille que celle décrite en relation avec les Figs 1 et 9 ou un réseau de communication sans fil structuré en étoile, selon lequel plusieurs nœuds mettant en œuvre le procédé de modification d'une configuration sont connectés à un même nœud (par exemple le nœud contrôleur mettant en œuvre le procédé de contrôle) ou encore un réseau de communication sans fil supervisé par un système de contrôleurs distribués ou par un contrôleur distant hébergé dans un réseau présentant une architecture en nuage (de l'anglais, « cloud computing »). Les mécanismes qui viennent d'être décrits s'appliquent de la même façon,
- un réseau hétérogène, dans lequel certains nœuds implémentent le procédé de modification d'une configuration précédemment décrit et d'autres non. Dans ce cas, un nœud qui n'implémente pas la solution proposée ne renégociera pas ses connexions établies avec d'autres nœuds du réseau, sur requête du nœud contrôleur, avant et après l'exécution d'une action de contrôle programmée.

Les modes de réalisation qui viennent d'être présentés, ainsi que leurs variantes, présentent chacun de nombreux avantages. La solution proposée permet notamment à des équipements d'accès à des réseaux sans fil connectés entre eux par des connexions multi-liens, de modifier en amont puis de rétablir en aval les configurations de leurs connexions pour éviter des perturbations engendrées par une action de contrôle programmée au niveau d'un ou plusieurs de ces équipements d'accès sur une bande de fréquences utilisée par un des liens des connexions. Les solutions offertes par plusieurs modes de réalisation fonctionnent avec des messages standards des normes IEEE 802.11 et EasyMesh tels que cités précédemment.

## Revendications

1. Procédé de gestion d'une configuration d'une pluralité de nœuds d'un réseau de communication sans fil (MN) contrôlé par un nœud contrôleur (CTR), lesdits nœuds de la pluralité de nœuds étant configurés pour établir entre eux des connexions, dites multi-liens, comprenant au moins deux liens utilisant au moins deux bandes de fréquences distinctes, ledit procédé, mis en œuvre par un dispositif (100) de gestion d'une configuration d'une pluralité de nœuds d'un réseau de communication sans fil, intégré au nœud contrôleur ou connecté à lui par une interface de communication, comprenant les étapes de:
- obtention (30) d'une information relative à une action de contrôle (CA) sur une desdites bandes de fréquences, programmée pour être exécutée par au moins undit nœud, dit nœud exécutant, et susceptible de perturber des communications sur une ou plusieurs connexions multi-liens établies entre le nœud exécutant et un ou plusieurs autres nœuds du réseau de communication sans fil ;
- déclenchement de l'émission (34), par le nœud contrôleur à destination d'au moins un nœud, dit nœud impacté, de la pluralité de nœuds, ledit au moins un nœud impacté comprenant ledit au moins un nœud exécutant, et au moins un autre nœud de ladite pluralité de nœuds, avec lequel ledit au moins un nœud exécutant a établi au moins une connexion multi-liens, dont au moins un lien, dit lien impacté, utilise ladite bande de fréquences sur laquelle l'action de contrôle est programmée, d'une requête de modification de configuration de ladite au moins une connexion, pour le lien impacté, ladite modification de configuration étant fonction de ladite action de contrôle et comprenant une commande de suppression d'une autorisation de transmission et de réception de données sur ledit lien impacté pour au moins un type de flux de données; et
- sur réception (35), en provenance dudit au moins undit nœud impacté, d'une confirmation de modification de configuration de ladite au moins une connexion, émission (36) à destination dudit nœud contrôleur d'une information indiquant que ladite action de contrôle programmée sur ladite bande de fréquences est prête à être exécutée.

2. Procédé selon la revendication précédente, **caractérisé en ce qu'**il comprend en outre les étapes de :
- obtention (37) d'un rapport d'exécution (RP_CA) de ladite action de contrôle (CA) sur ladite bande de fréquences, reçu par ledit nœud contrôleur en provenance dudit au moins un nœud exécutant, et
- émission (38), à destination dudit au moins un nœud impacté, d'une requête (RQ2_RCFG) de rétablissement de la configuration de ladite au moins une connexion.

3. Procédé selon l'une des revendications précédentes, **caractérisé en ce qu'**il comprend l'obtention (31) d'une information relative à un type de modification de configuration, au moins en fonction de l'information relative à l'action de contrôle, et
**en ce que**, lorsque l'information relative à un type de modification de configuration comprend une interruption du trafic de données sur ledit lien impacté, ladite commande de suppression d'une autorisation de transmission et de réception de données sur ledit lien concerne tous les types de flux de données de la connexion multi-liens et, lorsque l'information relative à un type de modification de configuration comprend une réduction du trafic de données sur ledit lien impacté, ladite suppression d'une autorisation de transmission et de réception de données sur ledit lien ne concerne pas tous les types de flux de données.

4. Procédé selon l'une quelconque des revendications précédentes, **caractérisé en ce qu'**il comprend en outre l'obtention (33) d'une liste (L_IMP) desdits nœuds impactés par ladite action de contrôle (CA), ladite liste comprenant ledit au moins un nœud exécutant et au moins un autre nœud connecté audit au moins équipement nœud par une connexion multi-liens comprenant ledit lien impacté, et **en ce que** la requête de notification de modification de configuration dudit lien est émise à destination des nœuds impactés de ladite liste.

5. Procédé selon la revendication précédente, **caractérisé en ce qu'**il comprend en outre l'étape d'obtention (32), en provenance de la pluralité de nœuds dudit réseau, d'informations (RSSI) relatives à un niveau de signal radio reçu de nœuds voisins, et **en ce que** la liste des nœuds impactés par ladite action de contrôle (CA) programmée est déterminée au moins à partir desdites informations reçues et d'un seuil (TH) minimal de niveau de signal radio reçu.

6. Procédé de traitement d'une requête de modification d'une configuration d'un nœud à un réseau de communication sans fil, ledit réseau de communication sans fil comprenant une pluralité de nœuds, lesdits nœuds de la pluralité de nœuds étant configurés pour établir entre eux des connexions, dites multi-liens, comprenant au moins deux liens utilisant au moins deux bandes de fréquences distinctes, ledit réseau de communication sans fil étant contrôlé par un nœud contrôleur (CTR), ledit procédé mis en œuvre par un dispositif (200) de traitement d'une requête de modification intégré audit nœud, comprenant les étapes de, :
- réception d'une requête (RQ1_RCFG) de modification de configuration d'unedite au moins une connexion multi-liens, établie par le nœud avec au moins un autre nœud dudit réseau de communication sans fil, émise par un nœud contrôleur dudit réseau maillé sans fil conformément au procédé selon l'une quelconque des revendications 1 à 5, ladite requête comprenant une commande de suppression d'une autorisation de transmission et de réception de données sur le lien utilisant une bande de fréquences donnée, pour au moins un type de flux de données,
- déclenchement de l'émission (52) par ledit nœud vers ledit au moins un autre nœud d'une première requête (RQ1_CNX) de renégociation de ladite connexion, mettant en œuvre ladite commande de suppression d'une autorisation de transmission et de réception de données sur ledit lien pour ladite au moins une connexion, pour le au moins un type de flux de données, et
- suite à la renégociation de ladite connexion, déclenchement de l'émission (54) par ledit nœud d'un message comprenant un rapport d'exécution de la modification de configuration à destination du nœud contrôleur.

7. Procédé selon la revendication précédente, **caractérisé en ce qu'**il comprend en outre les étapes de :
- réception d'une requête (RQ2_RCFG) de rétablissement de la configuration, en provenance du nœud contrôleur, ladite requête comprenant une commande d'ajout d'une autorisation de transmission et de réception de données sur ledit lien pour ladite au moins une connexion, pour ledit au moins un type de flux,
- déclenchement de l'émission (56) par ledit nœud, à destination de l'au moins un autre nœud, d'une deuxième requête (RQ2_CNX) de renégociation de ladite au moins une connexion, mettant en œuvre la commande d'ajout d'une autorisation de transmission et de réception de données sur ledit lien pour ladite au moins une connexion, pour ledit au moins un type de flux, et
- déclenchement de l'émission (58) par ledit nœud d'un message (RP2_RCFG) comprenant un rapport d'exécution du rétablissement de la configuration de ladite au moins une connexion.

8. Dispositif (100) de gestion d'une configuration d'une pluralité de nœuds d'un réseau de communication sans fil contrôlé par un nœud contrôleur (CTR), lesdits nœuds de la pluralité de nœuds étant configurés pour établir entre eux des connexions, dites multi-liens, comprenant au moins deux liens utilisant au moins deux bandes de fréquences distinctes, ledit dispositif étant intégré au nœud contrôleur ou connecté à lui par une interface de communication, ledit dispositif comprenant au moins ladite interface de communication, une mémoire et un processeur connecté à ladite au moins une interface de communication et à la mémoire pour en commander le fonctionnement et configuré pour :
- obtenir une information relative à une action de contrôle (CA) sur une desdites bandes de fréquences, ladite action de contrôle étant programmée pour être exécuté par au moins un nœud dudit réseau (MN), dit nœud exécutant, et susceptible de perturber des communications sur une ou plusieurs connexions multi-liens établies entre le nœud exécutant et un ou plusieurs autres nœuds du réseau de communication sans fil ;
- déclencher l'émission à destination d'au moins un nœud, dit nœud impacté, de la pluralité de nœuds, ledit au moins un nœud impacté comprenant ledit au moins un nœud exécutant et au moins un autre nœud de ladite pluralité de nœuds, avec lequel le nœud exécutant a établi au moins une connexion, dont au moins un lien, dit lien impacté, utilise ladite bande de fréquences sur laquelle l'action de contrôle est programmée, d'une requête de modification de configuration de ladite au moins une connexion, pour le lien impacté, ladite modification de configuration étant fonction de ladite action de contrôle et comprenant une commande de suppression d'une autorisation de transmission et de réception de données sur ledit lien impacté pour au moins un type de flux de données ; et
- Sur réception, en provenance dudit au moins undit nœud impacté, d'une confirmation de modification de configuration de ladite au moins une connexion, émettre à destination dudit nœud contrôleur une information indiquant que ladite action de contrôle programmée sur ladite bande de fréquences est prête à être exécutée.

9. Dispositif (200) de traitement d'une requête de modification d'une configuration d'un nœud d'un réseau de communication sans fil (MN) comprenant une pluralité de nœuds connectés entre eux par des connexions, dites multi-liens, comprenant au moins deux liens utilisant des bandes de fréquences distinctes, ledit réseau étant contrôlé par un nœud contrôleur (CTR), ledit nœud ayant établi au moins une connexion avec un autre nœud dudit réseau, ledit dispositif étant intégré audit nœud, ledit dispositif comprenant au moins une interface de communication, une mémoire et un processeur connecté à ladite au moins une interface de communication et à la mémoire pour en commander le fonctionnement et configuré pour :
- recevoir une requête (RQ1_RCFG) de modification de configuration d'au moins une connexion multi-liens, pour le lien de ladite pluralité de liens utilisant une bande de fréquences donnée émise par un dispositif de gestion selon la revendication 8 en provenance d'un nœud contrôleur dudit réseau maillé sans fil, ladite requête comprenant une commande de suppression d'une autorisation de transmission et de réception de données sur ledit lien pour ladite au moins une connexion, pour au moins un type de flux de données,
- déclencher une émission par ledit nœud vers ledit au moins un autre nœud d'une première requête (RQ1_CNX) de renégociation de ladite connexion, mettant en œuvre ladite commande de suppression d'une autorisation de transmission et de réception de données sur ledit lien pour ladite au moins une connexion, pour au moins un type de flux de données, et
- suite à la renégociation de ladite connexion, déclencher une émission par ledit nœud d'un message comprenant un rapport d'exécution de la modification de configuration à destination du nœud contrôleur.

10. Equipement d'accès (A, B, C, D) à un réseau de communication sans fil formant un nœud d'un réseau de communication sans fil (MN) comprenant une pluralité de nœuds, lesdits nœuds de la pluralité de nœuds étant configurés pour établir entre eux des connexions, dites multi-liens, comprenant au moins deux liens utilisant des bandes de fréquences distinctes, ledit nœud ayant établi au moins une dite connexion multi-liens, comprenant au moins deux liens utilisant les au moins deux bandes de fréquences distinctes, **caractérisé en ce qu'**il comprend un dispositif (200) de traitement d'une requête de modification d'une configuration selon la revendication 9.

11. Equipement d'accès (A), dit nœud exécutant, selon la revendication précédente, **caractérisé en ce qu'**il est en outre configuré pour :
- recevoir, en provenance d'un nœud contrôleur dudit réseau de communication sans fil (MN), une commande (RQ_CA) d'exécution d'une action de contrôle sur une desdites bandes de fréquences,
- suite à l'exécution de l'action de contrôle, émettre un rapport (RP_CA) d'exécution de l'action à destination de l'équipement nœud contrôleur.

12. Réseau de communication sans fil (MN) comprenant une pluralité de nœuds, lesdits nœuds étant des équipements d'accès selon les revendications 10 ou 11 et au moins un dispositif de gestion d'une configuration (100) selon la revendication 8.

13. Programme d'ordinateur comprenant des instructions pour l'exécution d'un procédé selon l'une quelconque des revendications 1 à 5, lorsque ledit programme est exécuté par un ordinateur.

14. Support d'enregistrement non volatile et lisible par un ordinateur, sur lequel est enregistré le programme d'ordinateur selon la revendication précédente.

15. Programme d'ordinateur comprenant des instructions pour l'exécution d'un procédé selon l'une quelconque des revendications 6 à 7, lorsque ledit programme est exécuté par un ordinateur.

16. Support d'enregistrement non volatile et lisible par un ordinateur, sur lequel est enregistré le programme d'ordinateur selon la revendication précédente.
